(19) Europäisches Patentamt
European Patent Office
Office européen des brevets

(11) EP 1 888 725 B1

(12) **EUROPEAN PATENT SPECIFICATION**

(45) Date of publication and mention of the grant of the patent:
**16.05.2018 Bulletin 2018/20**

(21) Application number: **06738850.4**

(22) Date of filing: **15.03.2006**

(51) Int Cl.:
***C10M 143/00*** (2006.01) ***C08F 297/08*** (2006.01)
***C08F 295/00*** (2006.01) ***C08F 2/38*** (2006.01)

(86) International application number:
**PCT/US2006/009847**

(87) International publication number:
**WO 2006/102146 (28.09.2006 Gazette 2006/39)**

(54) **VISCOSITY INDEX IMPROVER FOR LUBRICANT COMPOSITIONS**

VISKOSITÄTSINDEXVERBESSERER FÜR SCHMIERMITTELZUSAMMENSETZUNGEN

AMELIORANT DE L'INDICE DE VISCOSITE POUR DES COMPOSITIONS LUBRIFIANTES

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 PCT/US2005/008917**
**16.09.2005 US 718129 P**

(43) Date of publication of application:
**20.02.2008 Bulletin 2008/08**

(73) Proprietor: **Dow Global Technologies LLC**
**Midland, MI 48674 (US)**

(72) Inventors:
- **WALTON, Kim, Louis**
  **Lake Jackson, Texas 77566 (US)**
- **HUGHES, Morgan, Mark**
  **Angleton, Texas 77515 (US)**
- **CHEUNG, Yunwa, Wilson**
  **Pittsford, NY 14534 (US)**
- **RATH, Gary, L.**
  **Pearland, Texas 77584 (US)**

(74) Representative: **V.O.**
**P.O. Box 87930**
**2508 DH Den Haag (NL)**

(56) References cited:
**EP-A- 1 262 498**
**WO-A-95/27746**
**WO-A-2005/090425**
**WO-A-2005/090426**
**WO-A-2005/090427**
**WO-A1-2006/102153**
**US-A- 6 110 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 888 725 B1

## Description

### FIELD OF THE INVENTION

This invention relates to lubricant compositions including a base oil and a viscosity index improver comprising an ethylene/a-olefin interpolymer and processes of making the lubricant compositions.

### BACKGROUND OF THE INVENTION

The yearly economic losses related to friction and abrasion are estimated to be about 2-7% of the GDP in developed countries including the United States and European countries. A report by the U.S. Department of Energy in 1999 indicated that by adopting various measures to reduce friction and abrasion, motor vehicles and transmission systems in the United Sates save 120 billion US dollars each year. One of those measures includes the application of lubricant compositions in motor vehicles and industrial equipments.

Modern lubricant compositions are widely used in various applications such as motor oils, transmission fluids, gear oils, power steering fluids, shock absorber fluids, brake fluids, hydraulic fluids and greases. The lubricant compositions can have various functions such as (1) controlling friction between surfaces of moving parts; (2) reducing wear of moving parts; (3) reducing corrosion of surfaces of moving parts, particularly metal surfaces; (4) damping mechanical shock in gears; and (5) forming a seal on the walls of engine cylinders. Each lubricant composition can contain a base oil and, depending on the application, a combination of additives or modifiers, such as viscosity index improvers, pour point depressants, dispersants, detergents, anti-wear agents, antioxidants, friction modifiers, rust inhibitors, corrosion inhibitors, demulsifiers and anti-foams.

The viscosity index is commonly used as a measure of the rate of change of viscosity of a fluid with temperature. This temperature dependency is common to all fluids including base oils. In general, the higher the viscosity index, the smaller is the relative change in viscosity with temperature. The viscosity index (VI) improver or viscosity modifier is used to reduce the temperature dependency of the viscosity of the lubricant compositions so that the lubricant compositions can be used over a wide temperature range. In the other words, the VI improvers prevent the lubricant compositions from becoming too thin at a high temperature, e.g., hot summer temperatures, and too viscous at a low temperature, e.g., cold winter temperatures. Some known VI improvers include polymethacrylates, olefin copolymers, such as ethylene-propylene copolymers and ethylene-propylene diene-modified copolymers (EPDMs), and hydrogenated styrenic block copolymers such as styrene-ethylene/butylene-styrene copolymer (SEBS).

The hydrogenated styrenic block copolymers generally offer good thickening efficiency and excellent low temperature performance. However, these hydrogenated styrenic block copolymers are relative expensive and have limited useful life because of their low shear stability.

The olefin copolymers, such as amorphous ethylene-propylene copolymers, may offer good low temperature performance but poor thickening efficiency at high temperatures. The comonomer units of olefin copolymers can be distributed in a tapered manner. Generally, the tapered olefin copolymers, such as tapered ethylene-propylene copolymer, are excellent thickeners, have improved low temperature performance, and are able to avoid the undesirable interactions with the base oils.

Although there are many VI improvers available in the market for formulating lubricant compositions, there is always a need for new VI improvers for lubricant compositions with improved properties and flexibilities.

### SUMMARY OF INVENTION

The aforementioned needs are met by various aspects of the inventions. Lubricant compositions provided herein comprise (i) a base oil; and (ii) an ethylene/a-olefin block interpolymer, wherein the ethylene/a-olefin block interpolymer comprises at least 80 mole.%, of the whole polymer, of ethylene, and has an Mw/Mn from 2.0 to 3.5, and:

(a) has at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2$$

or

(b) is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30°C; or
(c) is characterized by an elastic recovery, Re, in percent at 300 percent strain and 1 cycle measured with a compression-molded film of the ethylene/$\alpha$-olefin block interpolymer, and has a density, d, in grams/cubic centimeter, wherein the numerical values of Re and d satisfy the following relationship when ethylene/a-olefin block interpolymer is substantially free of a cross-linked phase:

$$Re > 1481-1629(d);$$

or
(d) has a comonomer content of a TREF fraction which elutes between 40°C and 130°C greater than or equal to the quantity (-0.2013)T + 21.07, where T is the numerical value of the peak elution temperature of the TREF fraction, measured in °C; or
(e) has a storage modulus at 25°C, G'(25°C), and a storage modulus at 100°C, G'(100°C), wherein the ratio of G'(25°C) to G'(100°C) is in the range of about 1:1 to about 9:1. The ethylene/a-olefin block interpolymer can have one or any combination of the above characteristics, and may additionally have a molecular fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/a-olefin block interpolymer.

In a second embodiment, the invention relates to a lubricant composition comprising:

(i) a base oil; and
(ii) an ethylene/a-olefin block interpolymer, wherein the ethylene/a-olefin block interpolymer comprises at least 80 mole.%, of the whole polymer, of ethylene; and has an Mw/Mn from 2.0 to 3.5, and has

(a) at least one molecular fraction which elutes between 40°C and 130°C when fractionated using TREF, characterized in that the fraction has a block index of at least 0.5 and up to 1 or
(b) an average block index greater than 0.1 and up to about 1.0.

In one embodiment, the ethylene/a-olefin block interpolymer has at least one melting point, Tm, in degrees Celsius, and a density, d, in grams/cubic centimeter, wherein the numerical values of Tm and d correspond to the relationship:

$$Tm \geq 858.91 - 1825.3(d) + 1112.8(d)^2.$$

In another embodiment, the ethylene/a-olefin block interpolymer is characterized by an elastic recovery, Re, in percent at 300 percent strain and 1 cycle measured with a compression-molded film of the ethylene/a-olefin block interpolymer, and has a density, d, in grams/cubic centimeter, wherein the numerical values of Re and d satisfy the following relationship when ethylene/a-olefin block interpolymer is substantially free of a cross-linked phase: Re >1481-1629(d), Re >1491-1629(d), Re >1501-1629(d), or Re >1511-1629(d).
In one embodiment, the ethylene/a-olefin block interpolymer has (a) at least one molecular fraction which elutes between 40°C and 130°C when fractionated using TREF, characterized in that the fraction has a block index of at least 0.5 and up to 1 and a molecular weight distribution, Mw/Mn, greater than 1.3 or (b) an average block index greater than zero and up to 1.0 and a molecular weight distribution, Mw/Mn, greater than 1.3.
In another embodiment, the ethylene/a-olefin block interpolymer has a molecular fraction which elutes between 40°C and 130°C when fractionated using TREF, characterized in that the fraction has a molar comonomer content of at least 5 percent higher than that of a comparable random ethylene interpolymer fraction eluting between the same

temperatures, wherein said comparable random ethylene interpolymer has the same comonomer(s) and has a melt index, density, and molar comonomer content (based on the whole polymer) within 10 percent of that of the ethylene/a-olefin block interpolymer.

In one embodiment, the ethylene/a-olefin block interpolymer is a random block copolymer comprising at least a hard block and at least a soft block. Further, the random block copolymer can comprise multiple hard blocks and multiple soft blocks, and the hard blocks and soft blocks can be randomly distributed in a polymeric chain.

In another embodiment, the ethylene/a-olefin block interpolymer has a storage modulus at 25°C, G'(25°C), and a storage modulus at 100°C, G'(100°C), wherein the ratio of G'(25°C) to G'(100°C) is in the range of 1:1 to 9:1.

In one embodiment, the α-olefin used in the ethylene/a-olefin block interpolymer is styrene, propylene, 1-butene, 1-hexene, 1-octene, 4-methyl-1-pentene, norbornene, 1-decene, 1,5-hexadiene, or a combination thereof.

In another embodiment, the ethylene/a-olefin block interpolymer has a melt index in the range of 0.1 to 2000 g/10 minutes, 2 to 1500 g/10 minutes, 2 to 1000 g/10 minutes or 2 to 500 g/10 minutes measured according to ASTM D-1238, Condition 190°C/2.16 kg.

In one embodiment, the lubricant compositions comprise the base oil selected from a group consisting of the base stocks of API Groups I, II, III, IV and V and combinations thereof. In one embodiment, the base oil is a natural oil, a synthetic oil or a combination thereof.

The lubricant composition can further comprise at least an additive, such as a detergent, a dispersant, a friction modifier, a pour point depressant, a demulsifier, an anti-foam, a corrosion inhibitor, an anti-wear agent, an antioxidant, a rust inhibitor, a thickener or a combination thereof.

In one embodiment, the lubricant composition is a motor oil, a transmission fluid, a gear oil, a power steering fluid, a shock absorber fluid, a brake fluid, a hydraulic fluid or a grease. The motor oil can further comprise a pour point depressant, a detergent, a dispersant, an anti-wear, an antioxidant, a friction modifier, a rust inhibitor or a combination thereof.

In another embodiment, the lubricant composition is a transmission fluid. The transmission fluid can further comprise a friction modifier, a detergent, a dispersant, an antioxidant, an anti-wear agent, an extreme pressure agent, a pour point depressant, an anti-foam, a corrosion inhibitor or a combination thereof.

In one embodiment, the lubricant composition is a gear oil. The gear oil can further comprise an anti-wear, an extreme pressure agent, a rust inhibitor or a combination thereof.

In another embodiment, the lubricant composition is a grease. The grease can further comprise a thickener, a complexing agent, an antioxidant, an anti-wear agent, an extreme pressure agent, an anti-foam, a corrosion inhibitor or a mixture thereof.

Also provided are methods of making the lubricant composition, comprising blending a base oil with an ethylene/a-olefin block interpolymer, wherein the ethylene/a-olefin block interpolymer is as described above and elsewhere herein.

Additional aspects of the invention and characteristics and properties of various embodiments of the invention will become apparent with the following description.

## BRIEF DESCRIPTION OF THE DRAWINGS

Figure 1 shows the melting point/density relationship for the polymers used in the lubricant composition of the invention (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer examples 10-19. The "X" symbols represent polymer examples A*-F*.

Figure 3 shows the effect of density on elastic recovery for unoriented films made from interpolymers used in the lubricant composition of the invention (represented by the squares and circles) and traditional copolymers (represented by the triangles which are Dow AFFINITY® polymers). The squares represent inventive ethylene/butene copolymers; and the circles represent inventive ethylene/octene copolymers.

Figure 4 is a plot of octene content of TREF fractionated ethylene/1-octene copolymer fractions versus TREF elution temperature of the fraction for the polymer of Example 5 (represented by the circles) and comparative polymers E and F (represented by the "X" symbols). The diamonds represent traditional random ethylene/octene copolymers.

Figure 5 is a plot of octene content of TREF fractionated ethylene/1-octene copolymer fractions versus TREF elution temperature of the fraction for the polymer of Example 5 (curve 1) and for comparative F (curve 2). The squares represent Example F*; and the triangles represent Example 5.

Figure 6 is a graph of natural log storage modulus as a function of temperature for comparative ethylene/1-octene copolymer (curve 2) and ethylene/propylene copolymer (curve 3) and for two ethylene/1-octene block copolymers of the invention made with differing quantities of chain shuttling agent (curves 1).

Figure 7 shows a plot of TMA (1mm) versus flex modulus for some inventive polymers (represented by the diamonds), as compared to some known polymers. The triangles represent Dow VERSIFY® polymers; the circles represent random ethylene/styrene copolymers; and the squares represent Dow AFFINITY® polymers.

## DETAILED DESCRIPTION OF THE INVENTION

### General Definitions

"Polymer" means a polymeric compound prepared by polymerizing monomers, whether of the same or a different type. The generic term "polymer" embraces the terms "homopolymer," "copolymer," "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/α-olefin block interpolymer" generally refers to polymers comprising ethylene and an α -olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/a-olefin block interpolymers do not include those produced in low yields or in a minor amount or as a by-product of a chemical process. While the ethylene/a-olefin block interpolymers can be blended with one or more polymers, the as-produced ethylene/a-olefin block interpolymers are substantially pure and often comprise a major component of the reaction product of a polymerization process.

The ethylene/a-olefin block interpolymers comprise ethylene and one or more copolymerizable α-olefin comonomers in polymerized form, characterized by multiple blocks or segments of two or more polymerized monomer units differing in chemical or physical properties. That is, the ethylene/a-olefin interpolymers are block interpolymers, preferably multi-block interpolymers or copolymers. The terms "interpolymer" and copolymer" are used interchangeably herein. In some embodiments, the multi-block copolymer can be represented by the following formula:

$$(AB)n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight

percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in US 7,608,668 B2.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Disclosed herein are lubricant compositions comprising:

(a) a base oil; and
(b) an ethylene/a-olefin block interpolymer,

wherein the ethylene/a-olefin block interpolymer comprises at least 80 mole.%, of the whole polymer, of ethylene, and has a Mw/Mn from 2.0 to 3.5 and

(i) at least one melting point, Tm, in degrees Celsius and density, d, in grams/cubic centimeter, wherein the numerical values of the variables correspond to the relationship:

$$Tm > -2002.9 + 4538.5(d) - 2422.2(d)^2;$$

or

(ii) a heat of fusion, ΔH in J/g, and a delta quantity, ΔT, in degree celsius defined as the difference between the tallest DSC peak minus the tallest CRYSTAF peak, the ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48^{\circ}C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30°C. The ethylene/a-olefin block interpolymers are characterized by additional properties discussed below.

The ethylene/a-olefin block interpolymers disclosed herein function as VI improvers in the lubricant compositions. These ethylene/a-olefin block interpolymers provide flexibility in formulating desirable lubricant compositions by controlling the distribution of the comonomer units and the degree of crystallinity of the ethylene/a-olefin block interpolymers.

Ethylene/α-Olefin Interpolymers

The ethylene/α-olefin block interpolymers used in embodiments of the invention (also referred to herein-after as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene/ α-olefin block interpolymers are characterized by one or more of the aspects described as follows.

In one aspect, the ethylene/a-olefin block interpolymers used in embodiments of the invention have a $M_w/M_n$ from 2.0 to 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins whose melting points decrease with decreasing densities, the inventive interpolymers (represented by diamonds) exhibit melting points substantially independent of the density, particularly when density is between 0.87 g/cc to 0.95 g/cc. For example, the melting point of such polymers are in the range of 110°C to 130 °C when density ranges from 0.875 g/cc to 0.945 g/cc. In some embodiments, the melting point of such polymers are in the range of 115 °C to 125 °C when density ranges from 0.875 g/cc to 0.945 g/cc.

In another aspect, the ethylene/a-olefin block interpolymers comprise, in polymerized form, ethylene and one or more α-olefins and are characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for ΔH up to 130 J/g. Moreover, ΔT is equal to or greater than 48 °C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C, and ΔH is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation ΔT = -0.1299 (ΔH) + 62.81.

In yet another aspect, the ethylene/a-olefin block interpolymers have a molecular fraction which elutes between 40°C and 130°C when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/a-olefin block interpolymers are characterized by an elastic recovery, Re, in percent at 300 percent strain and 1 cycle measured on a compression-molded film of an ethylene/a-olefin block interpolymer, and has a density, d, in grams/cubic centimeter, wherein the numerical values of Re and d satisfy the following relationship when ethylene/a-olefin interpolymer is substantially free of a cross-linked phase:

$$Re > 1481-1629(d);$$

and preferably

$$Re \geq 1491-1629(d); \text{ and more preferably}$$

$$Re \geq 1501-1629(d);$$

and even more preferably

$$Re \geq 1511-1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/a-olefin block interpolymers have a tensile strength above 10 MPa, preferably a tensile strength ≥ 11 MPa, more preferably a tensile strength ≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/a-olefin block interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/a-olefin block interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to about 0 percent.

In some embodiments, the ethylene/a-olefin block interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/a-olefin interpolymers comprise, in polymerized form, at least 50 mole percent ethylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks .

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3$/$CH_2$] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/a-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl: methylene area ratio [$CH_3$/$CH_2$] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (- 0.2013) T + 20.07 (solid line). The line for the equation (-0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and comparative F to be discussed below. The peak eluting from 40 to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content

greater than the value determined from the calibration curve at the same TREF elution temperature, preferably at least 5 percent greater, more preferably at least 10 percent greater.

In addition to the above aspects and properties described herein, the inventive polymers can be characterized by one or more additional characteristics. In one aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one $\alpha$-olefin, especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.1356) T + 13.89, more preferably greater than or equal to the quantity (-0.1356) T+ 14.93, and most preferably greater than or equal to the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from 0.855 to 0.935 g/cm$^3$, and more especially for polymers having more than 1 mole percent comonomer, the blocked interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction having a comonomer content of at least about 6 mole percent, has a melting point greater than about 100°C. For those fractions having a comonomer content from about 3 mole percent to about 6 mole percent, every fraction has a DSC melting point of 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction that has an ATREF elution temperature greater than or equal to 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58,$$

The inventive block interpolymers have a molecular fraction which elutes between 40°C and 130°C, when fractionated using TREF increments, characterized in that every fraction that has an ATREF elution temperature between 40°C and less than 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain (http://www.polymerchar.com/).

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43, 59-170.

In other embodiments, the inventive ethylene/a-olefin interpolymer is characterized by an average block index, ABI, which is greater than zero and up to 1.0 and a molecular weight distribution, $M_w/M_n$, greater than 1.3. The average block index, ABI, is the weight average of the block index ("BI") for each of the polymer fractions obtained in preparative TREF from 20°C and 110°C, with an increment of 5°C :

$$ABI = \sum (w_i BI_i)$$

where $BI_i$ is the block index for the ith fraction of the inventive ethylene/a-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_x$ is the preparative ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/a-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta$$

where $\alpha$ and $\beta$ are two constants which can be determined by calibration using a number of known random ethylene copolymers. It should be noted that $\alpha$ and $\beta$ may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639$$

$T_{XO}$ is the ATREF temperature for a random copolymer of the same composition and having an ethylene mole fraction of $P_X$. $T_{XO}$ can be calculated from $\text{Ln}P_X = \alpha/T_{XO} + \beta$. Conversely, $P_{XO}$ is the ethylene mole fraction for a random copolymer of the same composition and having an ATREF temperature of $T_X$, which can be calculated from $\text{Ln } P_{XO} = \alpha/T_X+\beta$.

Once the block index (BI) for each preparative TREF fraction is obtained, the weight average block index, ABI, for the whole polymer can be calculated. In some embodiments, ABI is greater than zero but less than 0.3 or from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylene/a-olefin block interpolymer is that the inventive ethylene/a-olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, greater than 0.4 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer fraction has a block index greater than 0.2 and up to 0.9, greater than 0.3 and up to 0.8, greater than 0.4 and up to 0.7, or greater than 0.5 and up to 0.6.

For copolymers of ethylene and an $\alpha$-olefin, the inventive polymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100°C. Moreover, the inventive polymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic $\alpha$-olefins. (By the term "relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the ethylene/ $\alpha$-olefin interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/$\alpha$-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/a-olefin polymers is 1g/10 minutes, 3 g/10 minutes or 5 g/10 minutes.

The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/$cm^3$ and preferably for ethylene

containing polymers from 0.85 g/cm$^3$ to 0.97 g/cm$^3$. In certain embodiments, the density of the ethylene/a-olefin polymers ranges from 0.860 to 0.925 g/cm$^3$ or 0.867 to 0.910 g/cm$^3$.

The process of making the polymers has been disclosed in the following patent applications: WO-2005/090425, WO-2005/090426 and WO-2005/090427. For example, one such method comprises contacting ethylene and optionally one or more addition polymerizable monomers other than ethylene under addition polymerization conditions with a catalyst composition comprising:
the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.

**Catalyst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195 and WO 04/24740.

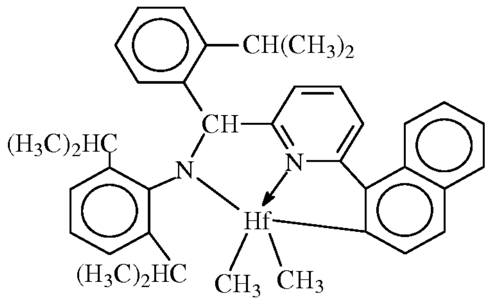

**Catalyst (A2)** is [N-(2,6-di(1-methylethyl)phenyl)amido)(2-methylphenyl)(1,2-phenylene-(6-pyridin-2-diyl)methane)]hafnium dimethyl, prepared according to the teachings of WO 03/40195 and WO 04/24740.

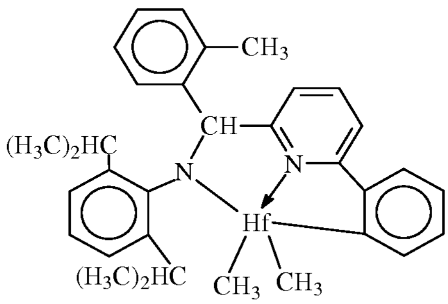

**Catalyst (A3)** is bis[N,N'''-(2,4,6-tri(methylphenyl)amido)ethylenediamine]hafnium dibenzyl.

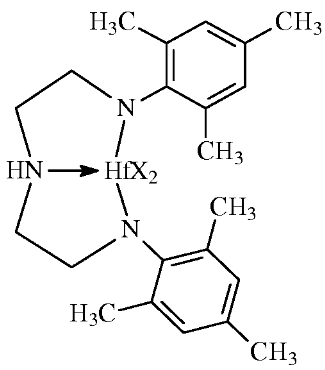

X= $CH_2C_6H_5$

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

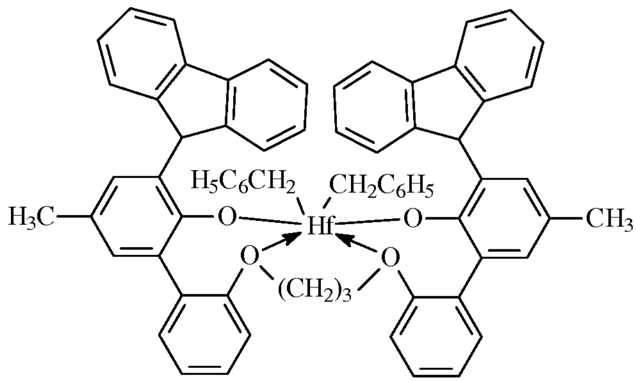

**Catalyst (B1)** is 1,2-bis-(3,5-di-t-butylphenylene)(1-(N-(1-methylethyl)immino)methyl)(2-oxoyl) zirconium dibenzyl

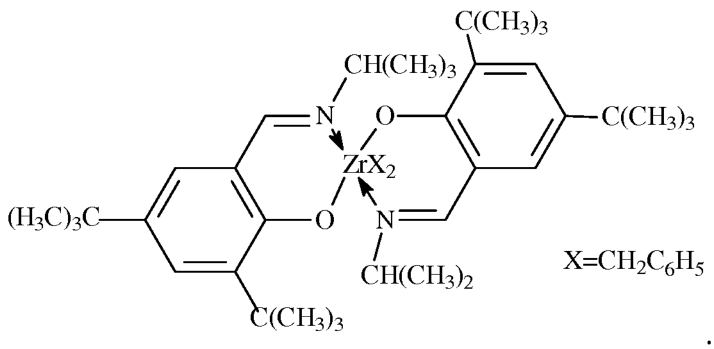

**Catalyst (B2)** is 1,2-bis-(3,5-di-t-butylphenylene)(1-(N-(2-methylcyclohexyl)-immino)methyl)(2-oxoyl) zirconium dibenzyl

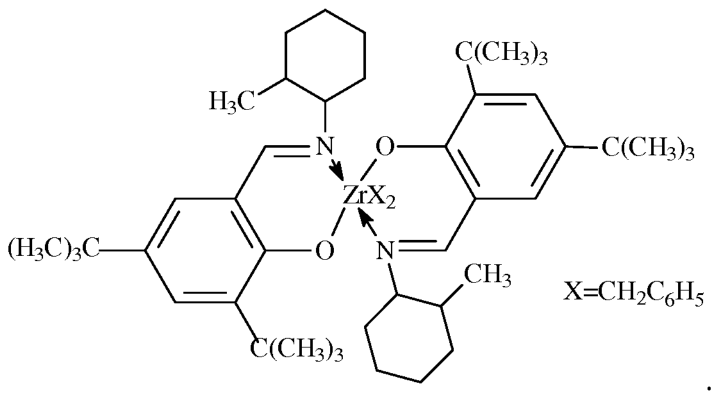

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

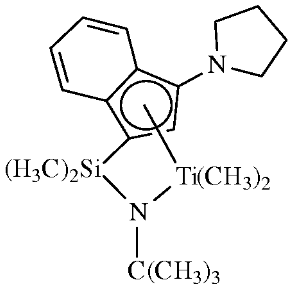

.

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

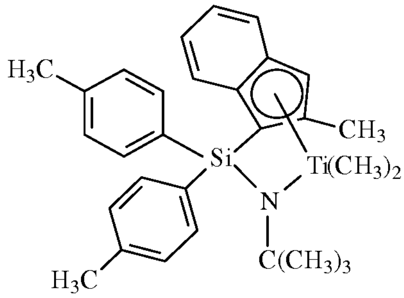

.

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

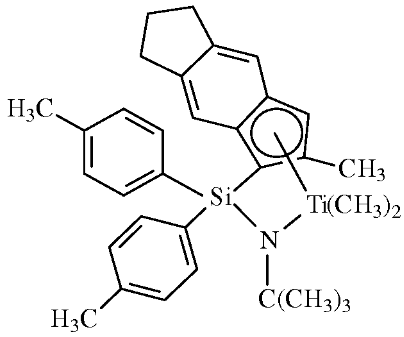

.

**Catalyst (D1)** is bis(dimethyldisiloxane)(indene-1-yl)zirconium dichloride available from Sigma-Aldrich:

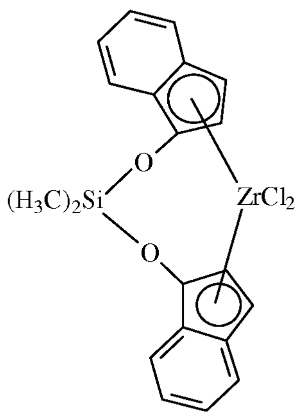

.

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any $\beta$-hydride elimination is observed in the polymerization of ethylene/$\alpha$-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but

upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene α-olefin block interpolymers used in the embodiments of the invention are preferably block interpolymers of ethylene with at least one $C_3$-$C_{20}$ α-olefin. Copolymers of ethylene and a $C_3$-$C_{20}$ α-olefin are especially preferred. The block interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes and alkenylbenzenes. Examples of such comonomers include $C_3$-$C_{20}$ α -olefins such as propylene, isobutylene, 1-butene, 1-hexene, 1-pentene, 4-methyl-1-pentene, 1-heptene, 1-octene, 1-nonene and 1-decene. 1-Butene and 1-octene are especially preferred. Other suitable monomers include styrene, halo- or alkyl-substituted styrenes, vinylbenzocyclobutane, 1,4-hexadiene, 1,7-octadiene, and naphthenics (e.g., cyclopentene, cyclohexene and cyclooctene).

While ethylene/a-olefin block interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene and other $C_4$-$C_{40}$ α-olefins. In certain embodiments, the α-olefin is propylene, 1-butene, 1-pentene,1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbornene, and norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made in accordance with embodiments of the invention are elastomeric interpolymers of ethylene, a $C_3$-$C_{20}$ α-olefin, especially propylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene and 1-octene. A particularly preferred α-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers comprise alternating segments or blocks containing greater or lesser quantities of the diene (including none) and α-olefin (including none), the total quantity of diene and α-olefin may be

reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an α-olefin content of from 10 to 80 percent, based on the total weight of the polymer. Further preferably, the multi-block elastomeric polymers have an ethylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to about 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250. More preferably, such polymers have an ethylene content from 65 to 75 percent, a diene content from 0 to 6 percent, and an α-olefin content from 20 to 35 percent.

The ethylene/a-olefin block interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/ α -olefin interpolymer, or it may be copolymerized with ethylene and an optional additional comonomer to form an interpolymer of ethylene, the functional comonomer and optionally other comonomer(s). Means for grafting functional groups onto polyethylene are described for example in U.S. Patents Nos. 4,762,890, 4,927,888 and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present in a copolymer-type functionalized interpolymer in an amount less than 40 weight percent, preferably less than 30 weight percent, and more preferably less than 25 weight percent.

The amount of the ethylene/a-olefin interpolymer in the lubricant composition disclosed herein can vary from 0.01 to 30 wt%, from 0.05 to 20 wt%, from 0.1 to 15 wt%, from 0.5 to 10 wt%, or from 1 to 5 wt%, based on the total amount of the lubricant composition.

Base Oils

Any base oil known to a person of ordinary skill in the art can be used for preparing the lubricant compositions. The base oils suitable for preparing lubricant compositions have been described in Mortier et al., "Chemistry and Technology of Lubricants," 2nd Edition, London, Springer, Chapters 1 and 2 (1996). Generally, the lubricant composition may comprise from about 70 to 99 wt% of the base oil, based on the total weight of the lubricant composition. In some embodiments, the lubricant composition comprises from about 80 to 98 wt% of the base oil, based on the total weight of the lubricant composition.

In some embodiments, the base oil comprises any of the base stocks in Groups I-V as specified in the American Petroleum Institute (API) Publication 1509, Fourteen Edition, December 1996 (*i.e.,* API Base Oil Interchangeability Guidelines for Passenger Car Motor Oils and Diesel Engine Oils). The API guideline defines a base stock as a lubricant component that may be manufactured using a variety of different processes. Groups I, II and III base stocks are mineral oils, each with specific ranges of the amount of saturates, sulfur content and viscosity index. Group IV base stocks are polyalphaolefins (PAO). Group V base stocks include all other base stocks not included in Group I, II, III, or IV. In particular embodiments, the base oil comprises a combination of the base stocks in Groups I-V.

In other embodiments, the base oil comprises a natural oil, a synthetic oil or a combination thereof. Non-limiting examples of suitable natural oils include animal oils (*e.g.,* lard oil), vegetable oils, (*e.g.,* corn oil, castor oil, and peanut oil), oils derived from coal or shale, mineral oils (*e.g.,* liquid petroleum oils and solvent treated or acid-treated mineral oils of the paraffinic, naphthenic or mixed paraffinic-naphthenic types) and combinations thereof. Non-limiting examples of suitable synthetic lubricating oils include poly-alpha-olefins, alkylated aromatics, polybutenes, aliphatic diesters, polyol esters, polyalkylene glycols, phosphate esters and combinations thereof.

In further embodiments, the base oil comprises hydrocarbon oils such as polyolefins (*e.g.,* polybutylenes, polypropylenes, propylene isobutylene copolymers, polyhexene, polyoctene and polydecene); alkylbenzenes (*e.g.,* dodecylbenzenes, tetradecylbenzenes, dinonylbenzenes and di-(2-ethylhexyl)benzenes); polyphenyls (*e.g.,* biphenyls, terphenyls, alkylated polyphenyls); alkylated diphenyl ethers; alkylated diphenyl sulfides; and the derivatives, isomers, analogs, homologs and combinations thereof.

In further embodiments, the base oil comprises a poly-alpha-olefin (PAO). In general, the poly-alpha-olefins

may be derived from an alpha-olefin having from 2 to 30, or from 4 to 20, or from 6 to 16 carbon atoms. Non-limiting examples of suitable poly-alpha-olefins include those derived from octene, decene and mixtures thereof. These poly-alpha-olefins may have a viscosity from $2*10^{-6}$ $m^2/s$ to $15*10^{-6}$ $m^2/s$, or from $3*10^{-6}$ $m^2/s$ to $12*10^{-6}$ $m^2/s$, or from $4*10^{-6}$ $m^2/s$ to $8*10^{-6}$ $m^2/s$ (2 to 15, or from 3 to 12, or from 4 to 8 centistokes) at 100°C. In some instances, the poly-alpha-olefins may be used together with other base oils such as mineral oils.

In further embodiments, the base oil comprises a polyalkylene glycol or a polyalkylene glycol derivative, where the terminal hydroxyl groups of the polyalkylene glycol may be modified by esterification, etherification, acetylation and the like. Non-limiting examples of suitable polyalkylene glycols include polyethylene glycol, polypropylene glycol, polyisopropylene glycol, and combinations thereof. Non-limiting examples of suitable polyalkylene glycol derivatives include ethers of polyalkylene glycols (*e.g.,* methyl ether of polyisopropylene glycol, diphenyl ether of polyethylene glycol, diethyl ether of polypropylene glycol, etc.), mono- and polycarboxylic esters of polyalkylene glycols, and combinations thereof. In some instances, the polyalkylene glycol or polyalkylene glycol derivative may be used together with other base oils such as poly-alpha-olefins and mineral oils.

In further embodiments, the base oil comprises any of the esters of dicarboxylic acids (*e.g.,* phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids and alkenyl malonic acids) with a variety of alcohols (*e.g.,* butyl alcohol, hexyl alcohol, dodecyl alcohol, 2-ethylhexyl alcohol, ethylene glycol, diethylene glycol monoether and propylene glycol). Non-limiting examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate and the 2-ethylhexyl diester of linoleic acid dimer.

In further embodiments, the base oil comprises a hydrocarbon prepared by the Fischer-Tropsch process. Fischer-Tropsch process prepares hydrocarbons from gases containing hydrogen and carbon monoxide using a Fischer-Tropsch catalyst. These hydrocarbons may require further processing in order to be useful as base oils. For example, the hydrocarbons may be dewaxed, hydroisomerized, and/or hydrocracked using processes known to a person of ordinary skill in the art.

In further embodiments, the base oil comprises a refined, unrefined, or rerefined oil. Unrefined oils are those obtained directly from a natural or synthetic source without further purification treatment. Non-limiting examples of unrefined oils include shale oils obtained directly from retorting operations, petroleum oils obtained directly from primary distillation, and ester oils obtained directly from an esterification process and used without further treatment. Refined oils are similar to the unrefined oils except the former have been further treated by one or more purification processes to improve one or more properties. Many such purification processes are known to those skilled in the art such as solvent extraction, secondary distillation, acid or base extraction, filtration, percolation, and the like. Rerefined oils are obtained by applying to refined oils processes similar to those used to obtain refined oils. Such rerefined oils are also known as reclaimed or reprocessed oils and often are additionally treated by processes directed to removal of spent additives and oil breakdown products.

## Additives

Optionally, the lubricant composition may further comprise at least an additive or a modifier (hereinafter designated as "additive") that can impart or improve any desirable property of the lubricant composition. Any additive known to a person of ordinary skill in the art may be used in the lubricant compositions disclosed herein. Some suitable additives have been described in Mortier et al., "Chemistry and Technology of Lubricants," 2nd Edition, London, Springer, (1996); and Leslie R. Rudnick, "Lubricant Additives: Chemistry and Applications," New York, Marcel Dekker (2003). In some embodiments, the additive can be selected from the group consisting of detergents, dispersants, friction modifiers, pour point depressants, demulsifiers, anti-foams, corrosion inhibitors, anti-wear agents, antioxidants, rust inhibitors, and combinations thereof. In general, the concentration of each of the additives in the lubricant composition, when used, can range from 0.001 to 20 wt%, from 0.01 to 10 wt% or from 0.1 to 5 wt%, based on the total weight of the lubricant composition.

The lubricant composition disclosed herein may comprise a detergent that can control varnish, ring zone deposits, and rust by keeping insoluble particles in colloidal suspension and in some cases, by neutralizing acids. Any detergent known by a person of ordinary skill in the art may be used in the lubricant composition. Non-limiting examples of suitable detergents include metal sulfonates, phenates, salicylates, phosphonates, thiophosphonates and combinations thereof. The metal can be any metal suitable for making sulfonate, phenate, salicylate or phosphonate detergents. Non-limiting examples of suitable metals include alkali metals, alkaline metals and transition metals. In some embodiments, the metal is Ca, Mg, Ba, K, Na, Li or the like. The amount of the detergent may vary from 0.01 to 10 wt%, from 0.05 to 5 wt%, or from 0.1 to 3 wt%, based on the total weight of the lubricant composition. Some suitable detergents have been described in Mortier et al., "Chemistry and Technology of Lubricants," 2nd Edition, London, Springer, Chapter 3, pages 75-85 (1996); and Leslie R. Rudnick, "Lubricant Additives: Chemistry and Applications," New York, Marcel

Dekker, Chapter 4, pages 113-136 (2003).

The lubricant composition disclosed herein may comprise a dispersant that can prevent sludge, varnish, and other deposits by keeping particles suspended in a colloidal state. Any dispersant known by a person of ordinary skill in the art may be used in the lubricant composition. Non-limiting examples of suitable dispersants include succinimides, succiamides, benzylamines, succinate esters, succinate ester-amides, Mannich type dispersants, phosphorus-containing dispersants, boron-containing dispersants and combinations thereof. The amount of the dispersant may vary from 0.01 to 10 wt%, from 0.05 to 7 wt%, or from 0.1 to 4 wt%, based on the total weight of the lubricant composition. Some suitable dispersants have been described in Mortier et al., "Chemistry and Technology of Lubricants," 2nd Edition, London, Springer, Chapter 3, pages 86-90 (1996); and Leslie R. Rudnick, "Lubricant Additives: Chemistry and Applications," New York, Marcel Dekker, Chapter 5, pages 137-170 (2003).

The lubricant composition disclosed herein may comprise a friction modifier that can lower the friction between moving parts. Any friction modifier known by a person of ordinary skill in the art may be used in the lubricant composition. Non-limiting examples of suitable friction modifiers include fatty carboxylic acids; derivatives (*e.g.,* esters, amides and metal salts) of fatty carboxylic acid; mono-, di- or tri-alkyl substituted phosphoric acids or phosphonic acids; derivatives (*e.g.,* esters, amides and metal salts) of mono-, di- or tri-alkyl substituted phosphoric acids or phosphonic acids; mono-, di- or tri-alkyl substituted amines; mono- or di-alkyl substituted amides and combinations thereof. In some embodiments, the friction modifier is selected from the group consisting of aliphatic amines, ethoxylated aliphatic amines, aliphatic carboxylic acid amides, ethoxylated aliphatic ether amines, aliphatic carboxylic acids, glycerol esters, aliphatic carboxylic ester-amides, fatty imidazolines, fatty tertiary amines, wherein the aliphatic or fatty group contains more than about eight carbon atoms so as to render the compound suitably oil soluble. In other embodiments, the friction modifier comprises an aliphatic substituted succinimide formed by reacting an aliphatic succinic acid or anhydride with ammonia or a primary amine. The amount of the friction modifier may vary from 0.01 to 10 wt%, from 0.05 to 5 wt%, or from 0.1 to 3 wt%, based on the total weight of the lubricant composition. Some suitable friction modifiers have been described in Mortier et al., "Chemistry and Technology of Lubricants," 2nd Edition, London, Springer, Chapter 6, pages 183-187 (1996); and Leslie R. Rudnick, "Lubricant Additives: Chemistry and Applications," New York, Marcel Dekker, Chapters 6 and 7, pages 171-222 (2003).

The lubricant composition disclosed herein may comprise a pour point depressant that can lower the pour point of the lubricant composition. Any pour point depressant known by a person of ordinary skill in the art may be used in the lubricant composition. Non-limiting examples of suitable pour point depressants include polymethacrylates, polyacrylates, di(tetra-paraffin phenol)phthalate, condensates of tetra-paraffin phenol, condensates of a chlorinated paraffin with naphthalene and combinations thereof. In some embodiments, the pour point depressant comprises an ethylene-vinyl acetate copolymer, a condensate of chlorinated paraffin and phenol or polyalkyl styrene. The amount of the pour point depressant may vary from 0.01 to 10 wt%, from 0.05 to 5 wt%, or from 0.1 to 3 wt%, based on the total weight of the lubricant composition. Some suitable pour point depressants have been described in Mortier et al., "Chemistry and Technology of Lubricants," 2nd Edition, London, Springer, Chapter 6, pages 187-189 (1996); and Leslie R. Rudnick, "Lubricant Additives: Chemistry and Applications," New York, Marcel Dekker, Chapter 11, pages 329-354 (2003).

The lubricant composition disclosed herein may comprise a demulsifier that can promote oil-water separation in lubricant compositions that are exposed to water or steam. Any demulsifier known by a person of ordinary skill in the art may be used in the lubricant composition. Non-limiting examples of suitable demulsifiers include anionic surfactants (*e.g.,* alkyl-naphthalene sulfonates and alkyl benzene sulfonates), nonionic alkoxylated alkylphenol resins, polymers of alkylene oxides (*e.g.,* polyethylene oxide, polypropylene oxide, block copolymers of ethylene oxide, propylene oxide and the like), esters of oil soluble acids and combinations thereof. The amount of the demulsifier may vary from 0.01 to 10 wt%, from 0.05 to 5 wt%, or from 0.1 to 3 wt%, based on the total weight of the lubricant composition. Some suitable demulsifiers have been described in Mortier et al., "Chemistry and Technology of Lubricants," 2nd Edition, London, Springer, Chapter 6, pages 190-193 (1996).

The lubricant composition disclosed herein may comprise an anti-foam that can break up foams in oils. Any anti-foam known by a person of ordinary skill in the art may be used in the lubricant composition. Non-limiting examples of suitable anti-foams include silicone oils or polydimethylsiloxanes, fluorosilicones, alkoxylated aliphatic acids, polyethers (e.g., polyethylene glycols), branched polyvinyl ethers, polyacrylates, polyalkoxyamines and combinations thereof. In some embodiments, the anti-foam comprises glycerol monostearate, polyglycol palmitate, a trialkyl monothiophosphate, an ester of sulfonated ricinoleic acid, benzoylacetone, methyl salicylate, glycerol monooleate, or glycerol dioleate. The amount of the anti-foam may vary from 0.01 to 5 wt%, from 0.05 to 3 wt%, or from 0.1 to 1 wt%, based on the total weight of the lubricant composition. Some suitable anti-foams have been described in Mortier et al., "Chemistry and Technology of Lubricants," 2nd Edition, London, Springer, Chapter 6, pages 190-193 (1996).

The lubricant composition disclosed herein may comprise a corrosion inhibitor that can reduce corrosion. Any corrosion inhibitor known by a person of ordinary skill in the art may be used in the lubricant composition. Non-limiting examples of suitable corrosion inhibitor include half esters or amides of dodecylsuccinic acid, phosphate esters, thiophosphates, alkyl imidazolines, sarcosines and combinations thereof. The amount of the corrosion inhibitor may vary

from 0.01 to 5 wt%, from 0.05 to 3 wt%, or from 0.1 to 1 wt%, based on the total weight of the lubricant composition. Some suitable corrosion inhibitors have been described in Mortier et al., "Chemistry and Technology of Lubricants," 2nd Edition, London, Springer, Chapter 6, pages 193-196 (1996).

The lubricant composition disclosed herein may comprise an anti-wear agent that can reduce friction and excessive wear. Any anti-wear agent known by a person of ordinary skill in the art may be used in the lubricant composition. Non-limiting examples of suitable anti-wear agents include zinc dithiophosphate, metal (e.g., Pb, Sb and Mo) salts of dithiophosphate, metal (e.g., Zn, Pb, Sb and Mo) salts of dithiocarbamate, metal (e.g., Zn, Pb and Sb) salts of fatty acids, boron compounds, phosphate esters, phosphite esters, amine salts of phosphoric acid esters or thiophosphoric acid esters, reaction products of dicyclopentadiene and thiophosphoric acids and combinations thereof. The amount of the anti-wear agent may vary from 0.01 to 5 wt%, from 0.05 to 3 wt%, or from 0.1 to 1 wt%, based on the total weight of the lubricant composition. Some suitable anti-wear agents have been described in Leslie R. Rudnick, "Lubricant Additives: Chemistry and Applications," New York, Marcel Dekker, Chapter 8, pages 223-258 (2003).

The lubricant composition disclosed herein may comprise an extreme pressure (EP) agent that can prevent sliding metal surfaces from seizing under conditions of extreme pressure. Any extreme pressure agent known by a person of ordinary skill in the art may be used in the lubricant composition. Generally, the extreme pressure agent is a compound that can combine chemically with a metal to form a surface film that prevents the welding of asperities in opposing metal surfaces under high loads. Non-limiting examples of suitable extreme pressure agents include sulfurized animal or vegetable fats or oils, sulfurized animal or vegetable fatty acid esters, fully or partially esterified esters of trivalent or pentavalent acids of phosphorus, sulfurized olefins, dihydrocarbyl polysulfides, sulfurized Diels-Alder adducts, sulfurized dicyclopentadiene, sulfurized or co-sulfurized mixtures of fatty acid esters and monounsaturated olefins, co-sulfurized blends of fatty acid, fatty acid ester and alpha-olefin, functionally-substituted dihydrocarbyl polysulfides, thia-aldehydes, thia-ketones, epithio compounds, sulfur-containing acetal derivatives, co-sulfurized blends of terpene and acyclic olefins, and polysulfide olefin products, amine salts of phosphoric acid esters or thiophosphoric acid esters and combinations thereof. The amount of the extreme pressure agent may vary from 0.01 to 5 wt%, from 0.05 to 3 wt%, or from 0.1 to 1 wt%, based on the total weight of the lubricant composition. Some suitable extreme pressure agents have been described in Leslie R. Rudnick, "Lubricant Additives: Chemistry and Applications," New York, Marcel Dekker, Chapter 8, pages 223-258 (2003).

The lubricant composition disclosed herein may comprise an antioxidant that can reduce or prevent the oxidation of the base oil. Any antioxidant known by a person of ordinary skill in the art may be used in the lubricant composition. Non-limiting examples of suitable antioxidants include amine-based antioxidants (*e.g.,* alkyl diphenylamines, phenyl-$\alpha$-naphthylamine, alkyl or aralkyl substituted phenyl-$\alpha$-naphthylamine, alkylated p-phenylene diamines, tetramethyl-diaminodiphenylamine and the like), phenolic antioxidants (*e.g.,* 2-*tert*-butylphenol, 4-methyl-2,6-di-*tert*-butylphenol, 2,4,6-tri-*tert*-butylphenol, 2,6-di-*tert*-butyl-p-cresol, 2,6-di-*tert*-butylphenol, 4,4'-methylenebis-(2,6-di-*tert*-butylphenol) and 4,4'-thiobis(6-di-*tert*-butyl-o-cresol)), sulfur-based antioxidants (*e.g.,* dilauryl-3,3'-thiodipropionate and sulfurized phenolic antioxidants), phosphorous-based antioxidants (*e.g.,* phosphites), zinc dithiophosphate, oil-soluble copper compounds and combinations thereof. The amount of the antioxidant may vary from 0.01 to 10 wt %, from 0.05 to 5%, or from 0.1 to 3%, based on the total weight of the lubricant composition. Some suitable antioxidants have been described in Leslie R. Rudnick, "Lubricant Additives: Chemistry and Applications," New York, Marcel Dekker, Chapter 1, pages 1-28 (2003).

The lubricant composition disclosed herein may comprise a rust inhibitor that can inhibit the corrosion of ferrous metal surfaces. Any rust inhibitor known by a person of ordinary skill in the art may be used in the lubricant composition. Non-limiting examples of suitable rust inhibitors include oil-soluble monocarboxylic acids (*e.g.,* 2-ethylhexanoic acid, lauric acid, myristic acid, palmitic acid, oleic acid, linoleic acid, linolenic acid, behenic acid and cerotic acid), oil-soluble polycarboxylic acids (*e.g.,* those produced from tall oil fatty acids, oleic acid and linoleic acid), alkenylsuccinic acids in which the alkenyl group contains 10 or more carbon atoms (*e.g.,* tetrapropenylsuccinic acid, tetradecenylsuccinic acid and hexadecenylsuccinic acid); long-chain alpha,omega-dicarboxylic acids having a molecular weight in the range of 600 to 3000 daltons and combinations thereof. The amount of the rust inhibitor may vary from 0.01 to 10 wt %, from 0.05 to 5%, or from 0.1 to 3%, based on the total weight of the lubricant composition.

The additives may be in the form of an additive concentrate having more than one additive. The additive concentrate may comprise a suitable diluent, most preferably a hydrocarbon oil of suitable viscosity. Such diluent can be selected from the group consisting of natural oils (*e.g.,* mineral oils), synthetic oils and combinations thereof. Non-limiting examples of the mineral oils include paraffin-based oils, naphthenic-based oils, asphaltic-based oils and combinations thereof. Non-limiting examples of the synthetic base oils include polyolefin oils (especially hydrogenated alpha-olefin oligomers), alkylated aromatic, polyalkylene oxides, aromatic ethers, and carboxylate esters (especially diester oils) and combinations thereof. In some embodiments, the diluent is a light hydrocarbon oil, both natural or synthetic. Generally, the diluent oil can have a viscosity in the range of 13 to 35 centistokes at 40°C.

The lubricant composition disclosed herein may be suitable for use as motor oils (or engine oils or crankcase oils), transmission fluids, gear oils, power steering fluids, shock absorber fluids, brake fluids, hydraulic fluids and/or greases.

In some embodiments, the lubricant composition disclosed herein is a motor oil. Such a motor oil composition may be used to lubricate all major moving parts in any reciprocating internal combustion engine, reciprocating compressors and in steam engines of crankcase design. In automotive applications, the motor oil composition may also be used to cool hot engine parts, keep the engine free of rust and deposits, and seal the rings and valves against leakage of combustion gases. The motor oil composition may comprise a base oil and the ethylene/a-olefin block interpolymer. The motor oil composition may further comprise at least an additive. In some embodiments, the motor oil composition further comprises a pour point depressant, a detergent, a dispersant, an anti-wear, an antioxidant, a friction modifier, a rust inhibitor, or a combination thereof.

In other embodiments, the lubricant composition disclosed herein is a gear oil for either automotive or industrial applications. The gear oil composition may be used to lubricate gears, rear axles, automotive transmissions, final drive axles, accessories in agricultural and construction equipment, gear housings and enclosed chain drives. The gear oil composition may comprise a base oil and the ethylene/a-olefin block interpolymer. The gear oil composition may further comprise at least an additive. In some embodiments, the gear oil composition further comprises an anti-wear, an extreme pressure agent, a rust inhibitor, or a combination thereof.

In further embodiments, the lubricant composition disclosed herein is a transmission fluid. The transmission fluid composition may be used in either automatic transmission or manual transmission to reduce transmission losses. The transmission fluid composition may comprise a base oil and the ethylene/a-olefin block interpolymer. The transmission fluid composition may further comprise at least an additive. In some embodiments, the transmission fluid composition further comprises a friction modifier, a detergent, a dispersant, an antioxidant, an anti-wear agent, an extreme pressure agent, a pour point depressant, an anti-foam, a corrosion inhibitor or a combination thereof.

In further embodiments, the lubricant composition disclosed herein is a grease used in various applications where extended lubrication is required and where oil would not be retained, *e.g.,* on a vertical shaft. The grease composition may comprise a base oil, the ethylene/a-olefin interpolymer and a thickener. In some embodiments, the grease composition further comprise a complexing agent, an antioxidant, an anti-wear agent, an extreme pressure agent, an anti-foam, a corrosion inhibitor or a mixture thereof. In some embodiments, the thickener is a soap formed by reacting a metal hydroxide (*e.g.,* lithium hydroxide, sodium hydroxide, potassium hydroxide, calcium hydroxide and zinc hydroxide) with a fat, a fatty acid, or an ester. In general, the type of soap used depends on the grease properties desired. In other embodiments, the thickener may be a non-soap thickener selected from the group consisting of clays, silica gels, carbon black, various synthetic organic materials and combinations thereof. In further embodiments, the thickener comprises a combination of soaps and non-soap thickeners.

Processes of Preparing Lubricant compositions

The lubricant compositions disclosed herein can be prepared by any method known to a person of ordinary skill in the art for making lubricating oils. In some embodiments, the base oil can be blended or mixed with the ethylene/a-olefin block interpolymer and optionally at least an additive. The ethylene/a-olefin block interpolymer and the optional additives may be added to the base oil individually or simultaneously. In some embodiments, the ethylene/a-olefin block interpolymer and the optional additives are added to the base oil individually in one or more additions and the additions may be in any order. In other embodiments, the ethylene/a-olefin block interpolymer and the additives are added to the base oil simultaneously, optionally in the form of an additive concentrate. In some embodiments, the solubilizing of the ethylene/a-olefin block interpolymer or any solid additives in the base oil may be assisted by heating the mixture to a temperature between 25 and 200°C, from 50 and 150°C or from 75 and 125°C.

Any mixing or dispersing equipment known to a person of ordinary skill in the art may be used for blending, mixing or solubilizing the ingredients. The blending, mixing or solubilizing may be carried out with a blender, an agitator, a disperser, a mixer (*e.g.,* Ross double planetary mixers and Collette planetary mixers), a homogenizer (*e.g.,* Gaulin homogeneizers and Rannie homogeneizers), a mill (*e.g.,* colloid mill, ball mill and sand mill) or any other mixing or dispersing equipment known in the art.

Embodiments of the invention provide lubricant compositions made from a base oil and the ethylene/a-olefin block interpolymer. Preferably, the ethylene/a-olefin block interpolymer is a multi-block copolymer comprising at least one soft block and at least one hard block.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

## EXAMPLES

### Testing Methods

In the examples that follow, the following analytical techniques are employed:

### GPC Method for Samples 1-4 and A-C

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as the mobile phase through three Plgel 10 micrometer (μm) Mixed B 300mm x 7.5mm columns placed in series and heated to 160°C. A Polymer Labs ELS 1000 Detector is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C and each sample injected into a 250 μl loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

### Standard CRYSTAF Method

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

### DSC Standard Method (Excluding Samples 1-4 and A-C)

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

### GPC Method (Excluding Samples 1-4 and A-C)

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene}=0.431(M_{polystyrene})$.

Polyethylene equivalent molecular weight calculations are performed using Viscotek TriSEC software Version 3.0.

### Compression Set

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

### Density

Samples for density measurement are prepared according to ASTM D 1928. Measurements are made within one hour of sample pressing using ASTM D792, Method B.

### Flexural/Secant Modulus/ Storage Modulus

Samples are compression molded using ASTM D 1928. Flexural and 2 percent secant moduli are measured according to ASTM D-790. Storage modulus is measured according to ASTM D 5026-01 or equivalent technique.

### Optical properties

Films of 0.4 mm thickness are compression molded using a hot press (Carver Model #4095-4PR1001R). The pellets are placed between polytetrafluoroethylene sheets, heated at 190 °C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner Haze-gard as specified in ASTM D 1746.

45° gloss is measured using BYK Gardner Glossmeter Microgloss 45° as specified in ASTM D-2457.

Internal haze is measured using BYK Gardner Haze-gard based on ASTM D 1003 Procedure A. Mineral oil is applied to the film surface to remove surface scratches.

### Mechanical Properties - Tensile, Hysteresis, and Tear

Stress-strain behavior in uniaxial tension is measured using ASTM D 1708 microtensile specimens. Samples are stretched with an Instron at 500 % $min^{-1}$ at 21°C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\% \mathrm{Recovery} = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\% \, Stress \; Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

TMA

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

**DMA**

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation $\Delta L$) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation $\Delta L$ increases with the temperature, particularly above the melting or softening point of the polymer sample. The test stops at the maximum temperature or when the gap between the fixtures reaches 65 mm.

**Melt Index**

Melt index, or $I_2$, is measured in accordance with ASTM D 1238, Condition 190°C/2.16 kg. Melt index, or $I_{10}$ is also measured in accordance with ASTM D 1238, Condition 190°C/10 kg.

**ATREF**

Analytical temperature rising elution fractionation (ATREF) analysis is conducted according to the method described in USP 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared

detector. An ATREF chromatogram curve is then generated by eluting the crystallized polymer sample from the column by slowly increasing the temperature of the eluting solvent (trichlorobenzene) from 20 to 120°C at a rate of 1.5°C/min.

### $^{13}C$ NMR Analysis

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989).

### Polymer Fractionation by TREF

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

### Melt Strength

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/$sec^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

### Catalysts

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation Isopar E®, from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**MMAO** refers to modified methylalumoxane, a triisobutylaluminum modified methylalumoxane available commercially from Akzo-Noble Corporation.

The preparation of catalyst (B1) is conducted as follows.

a) Preparation of (1-methylethyl)(2-hydroxy-3,5-di(t-butyl)phenyl)methylamine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow,

crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid. The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1$H NMR is consistent with the desired product as a mixture of isomers.

b) Preparation of bis-(1-(2-methylcyclohexyl)ethyl)(2-oxoyl-3,5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$ alkyl)ammonium salts of tetrakis(pentafluorophenyl)borate (here-inafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

**Cocatalyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis(dimethyl(t-butyl)siloxide(SA18), ethylzinc (2,6-diphenylphenoxide) (SA19), and ethylzinc (t-butoxide) (SA20).

Examples 1-4, Comparative A-C

General High Throughput Parallel Polymerization Conditions

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130°C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) contained of 48 individual reactor cells in a 6 x 8 array that are fitted with a pre-weighed glass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 1. In Table 1 and elsewhere in the application, comparative compounds

are indicated by an asterisk (*).

Examples 1-4 demonstrate the synthesis of linear block copolymers by the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

**Table 1**

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30 °C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for comparative C shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

Examples 5-19, Comparatives D-F, Continuous Solution Polymerization, Catalyst A1/B2 + DEZ

Continuous solution polymerizations are carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and

the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

**Table 2 Process details for preparation of exemplary polymers**

| Ex. | $C_8H_{16}$ kg/hr | Solv. kg/hr | $H_2$ sccm[1] | T °C | Cat A1[2] ppm | Cat A1 Flow kg/hr | Cat B2[3] ppm | B2 Flow Kg/hr | DEZ Cone % | DEZ Flow kg/hr | Cocat Conc. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | " | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

1 standard cm /min

2. [N-(2,6-di(1-methylethyl)phenyl)amido)(2-isopropylphenyl)(α-naphthalen-2-diyl(6-pyridin-2-diyl)methane)]hafnium dimethyl

3. bis-(1-(2-methylcyclohexyl)ethyl)(2-oxoyl-3,5-di(t-butyl)phenyl)immino) zirconium dibenzyl

4. molar ratio in reactor

5. polymer production rate

6. percent ethylene conversion in reactor

7 efficiency, kg polymer/g M where g M = g Hf + g Zr

**Table 3 Properties of exemplary polymers**

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | $Tm-T_{CRYSTAF}$ (°C) | CRYSTAF Peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows: The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of example 8 shows a peak with a 123.5 °C melting point (Tm) with a heat of fusion of 67.9 J/g. The corresponding CRYSTAF curve shows the tallest peak at 80.1°C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30°C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of comparative D shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of comparative E shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of comparative F shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

**Physical Property Testing**

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative G* is a substantially linear ethylene/1-octene copolymer (AFFINITY®, available from The Dow Chemical Company), Comparative H* is an elastomeric, substantially linear ethylene/ 1-octene copolymer (AFFINITY®EG8100, available from The Dow Chemical Company), Comparative I is a substantially linear ethylene/1-octene copolymer (AFFINITY®PL1840, available from The Dow Chemical Company), Comparative J is a hydrogenated styrene/butadiene/styrene triblock copolymer (KRATON™ G1652, available from KRATON Polymers), Comparative K is a thermoplastic vulcanizate (TPV, a polyolefin blend containing dispersed therein a crosslinked elastomer). Results are presented in Table 4.

Table 4 High Temperature Mechanical Properties

| Ex. | TMA-1mm penetration (°C) | Pellet Blocking Strength lb/ft$^2$ (kPa) | G'(25°C)/ G'(100°C) | 300 % Strain Recovery (80°C) (percent) | Compression Set (70°C) (percent) |
|---|---|---|---|---|---|
| D* | 51 | - | 9 | Failed | - |
| E* | 130 | - | 18 | - | - |
| F* | 70 | 141 (6.8) | 9 | Failed | 100 |
| 5 | 104 | 0(0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0 (0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative F (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This shows that the novel polymers have better dimensional stability at higher temperatures compared to a physical blend. Comparative J (a commercial SEBS) has a good 1 mm TMA temperature of about 107°C, but it has very poor (high

temperature 70°C) compression set of about 100 percent and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100°C), for the inventive polymers of 6 or less, whereas a physical blend (Comparative F) has a storage modulus ratio of 9 and a random ethylene/octene copolymer (Comparative G) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 4 also demonstrate that the polymers of the invention possess improved pellet blocking strength. In particular, Example 5 has a pellet blocking strength of 0 MPa, meaning it is free flowing under the conditions tested, compared to Comparatives F and G which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than about 80 percent, preferably less than about 70 percent and especially less than about 60 percent. In contrast, Comparatives F, G, H and J all have a 70°C compression set of 100 percent (the maximum possible value, indicating no recovery). Good high temperature compression set (low numerical values) is especially needed for applications such as gaskets, window profiles, o-rings, and the like.

Table 5 Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
|---|---|---|---|---|---|---|---|---|---|---|---|---|---|
| K* | - | - | - | - | - | - | - | - | - | - | - | 30 | - |

1. Tested at 51 cm/minute
2. measured at 38°C for 12 hours

Table 5 shows results for mechanical properties for the new polymers as well as for various comparison polymers at ambient temperatures. It may be seen that the inventive polymers have very good abrasion resistance when tested according to ISO 4649, generally showing a volume loss of less than about 90 $mm^3$, preferably less than about 80 $mm^3$, and especially less than about 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the polymers of the invention have better retractive stress at 150 percent strain (demonstrated by higher retractive stress values) than some of the comparative samples. Comparative Examples F, G and H have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative G. Lower stress relaxation means that the polymer retains its force better in applications such as diapers and other garments where retention of elastic properties over long time periods at body temperatures is desired.

<u>Optical Testing</u>

Table 6 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 6 are based on compression molded films substantially lacking in

orientation. Optical properties of the polymers may be varied over wide ranges, due to variation in crystallite size, resulting from variation in the quantity of chain shuttling agent employed in the polymerization.

Extractions of Multi-Block Copolymers

Extraction studies of the polymers of examples 5, 7 and Comparative E are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40°C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40°C.

The polymer sample remaining in the thimble after the extractions is transferred from the thimble to a weighed bottle and vacuum dried overnight at 40°C. Results are contained in Table 7.

Table 7

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex. 7 | 1.092 | 0.017 | 1.59 | 13.3 | 0.012 | 1.10 | 11.7 | 9.9 |

1. Determined by $^{13}C$ NMR

**Additional Polymer Examples 19 A-F, Continuous Solution Polymerization, Catalyst A1/B2 + DEZ**

Continuous solution polymerizations are carried out in a computer controlled well-mixed reactor. Purified mixed alkanes solvent (Isopar™ E available from ExxonMobil Chemical Company.), ethylene, 1-octene, and hydrogen (where used) are combined and fed to a 27 gallon reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 550 psig pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

Process details and results are contained in Table 8. Selected polymer properties are provided in Table 9.

**Table 8 Polymerization Conditions for Polymers 19A-J**

| Ex. | $C_2H_4$ lb/hr | $C_8H_{16}$ lb/hr | Solv. lb/hr | $H_2$ sccm[1] | T °C | Cat A1[2] Conc. ppm | Cat A1 Flow lb/hr | Cat B2[3] Conc. ppm | Cat B2 Flow lb/hr | DEZ Conc wt% | DEZ Flow lb/hr | Cocat 1 Conc. ppm | Cocat 1 Flow lb/hr | Cocat 2 Conc. ppm | Cocat 2 Flow lb/hr | [Zn][4] in polymer ppm | Poly Rate[5] lb/hr | Conv[6] wt% | Polymer wt% | Eff.[7] |
|---|---|---|---|---|---|---|---|---|---|---|---|---|---|---|---|---|---|---|---|---|
| 19A | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19B | 53.95 | 28.96 | 325.3 | 577 | 120 | 600 | 0.25 | 200 | 0.55 | 3.0 | 0.24 | 4500 | 0.63 | 525 | 0.11 | 90 | 80.72 | 88.1 | 17.2 | 295 |
| 19C | 55.53 | 30.97 | 324.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19D | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19E | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19F | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19G | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19H | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 19I | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19J | 7.46 | 9.04 | 50.6 | 47 | 120 | 150 | 0.22 | 76.7 | 0.36 | 0.5 | 0.19 | - | - | - | - | - | - | - | - | - |

[1] standard $cm^3$/min
[2] [N-(2,6-di(1-methylethyl)phenyl)amido)(2-isopropylphenyl)(α-naphthalen-2-diyl(6-pyridin-2-diyl)methane)]hafnium dimethyl
[3] bis-(1-(2-methylcyclohexyl)ethyl)(2-oxoyl-3,5-di(t-butyl)phenyl)immino) zirconium dimethyl
[4] ppm in final product calculated by mass balance
[5] polymer production rate
[6] weight percent ethylene conversion in reactor
[7] efficiency, kg polymer/g M where g M = g Hf + g Z

**Table 9 Polymer Physical properties**

| Polymer Ex. No. | Density (g/cc) | I2 | I10 | I10/12 | Mw (g/mol) | Mn (g/mol) | Mw/Mn | Heat of Fusion (J/g) | Tm (°C) | Tc (°C) | TCRYSTAF (°C) | Tm-TCRYSTAF (°C) | CRYST AF Peak Area (wt%) |
|---|---|---|---|---|---|---|---|---|---|---|---|---|---|
| 19G | 0.8649 | 0.9 | 6.4 | 7.1 | 135000 | 64800 | 2.1 | 26 | 120 | 92 | 30 | 90 | 90 |
| 19H | 0.8654 | 1.0 | 7.0 | 7.1 | 131600 | 66900 | 2.0 | 26 | 118 | 88 | - | - | |

**Table 9b Average Block Index For exemplary polymers[1]**

| Example | Zn/C2[2] | Average BI |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the measurement and calculation of the block indices for various polymers is disclosed in U.S. Patent Application Serial No. _ (insert when known), entitled "Ethylene/α-Olefin Block Interpolymers", filed on March 15, 2006, in the name of Colin L.P. Shan, Lonnie Hazlitt, et. al. and assigned to Dow Global Technologies Inc., the disclose of which is incorporated by reference herein in its entirety.
2. Zn/C2 *1000 = (Zn feed flow*Zn concentration/1000000/Mw of Zn)/(Total Ethylene feed flow*(1-fractional ethylene conversion rate)/Mw of Ethylene)*1000. Please note that "Zn" in "Zn/C2*1000" refers to the amount of zinc in diethyl zinc ("DEZ") used in the polymerization process, and "$C_2$" refers to e amount of ethylene used in the polymerization process.

Examples 20-23 - Ethylene/α-olefin Interpolymers

Polymer Examples 20-23 were prepared under reaction conditions substantially similar to those for polymer Examples 1-19. One skilled in the art knows how to manipulate process conditions, such as shuttling agent ratios, hydrogen flow, monomer concentration, etc., to make a target polymer with desired properties using the process conditions already detailed in the instant application. Properties for the polymers of Examples 20-23 are shown in Tables 10 A and 10 B.

**Table 10A: Properties of exemplary polymers**

| Polymer Example No. | Density (g/cc) | $I_2$ @ 190 C | $I_{10}$ @ 190 C | $I_{10}/I_2$ | Mol % Butene (NMR) | Mw (g/mol) | Mn (g/mol) | Mw/Mn | Overall Heat of Fusion (J/g) |
|---|---|---|---|---|---|---|---|---|---|
| 20 | 0.8778 | 0.9 | 6.39 | 7.0 | | 123600 | 59300 | 2.1 | 57 |
| 21 | 0.8652 | 1.1 | 7.48 | 6.8 | 14.6 | 124900 | 60700 | 2.1 | 27 |
| 22 | 0.8666 | 1.1 | 7.20 | 6.4 | 17.7 | 93400 | 46900 | 2.0 | 40 |
| 23 | 0.8641 | 1.0 | 6.40 | 6.4 | 17.8 | 113400 | 57700 | 2.0 | 44 |
| 23A | 0.8795 | 0.9 | 6.04 | 6.6 | 15.1 | 115700 | 50500 | 2.3 | 61 |
| 23B | 0.8802 | 1.1 | 7.42 | 6.8 | NM | 112200 | 37200 | 3.0 | 63 |

**Table 10B: Properties of exemplary polymers**

| Polymer Example No | Overall wt% crystallinity | Tm (°C) | Overall heat of cryst (J/g) | Tc (°C) | $T_{CRYSTAF}$ (°C) | $T_m$-$T_{CRYSTAF}$ (°C) | CRYSTAF Peak Area (wt%) | $T_{ATREF}$ (°C) | ATREF Peak Area (wt %) |
|---|---|---|---|---|---|---|---|---|---|
| 20 | 20 | 120 | 56 | 98 | 47 | 72 | 53 | 88.5 | 65 |
| 21 | 9 | 119 | 29 | 88 | 30 | 89 | 89 | 79 | 44 |
| 22 | 13.6 | 115.9 | 33 | 89 | 30 | 86 | 94 | 76 | 23 |
| 23 | 15.1 | 117.9 | 33 | 99 | 30 | 88 | 95 | 72 | 20 |
| 23A | 21 | 118 | 56 | 99 | 36 | 82 | 20 | 86 | 58 |
| 23B | 22 | 122 | 58 | 105 | 30 | 92 | 77 | 86.5 | 53 |

General Procedure for the Preparation of Lubricant Compositions

Examples 24-27 and Comparative Examples L-W are lubricant compositions having formulations and process conditions as shown in Tables 11A, 11B and 11C below. Each of the lubricant composition comprises the same base oil, *i.e,* Exxon FN1365 100LP, but a different polymer or VI improver. The ratio of the base oil to the polymer is 99:1 by weight for all lubricant compositions.

Table 11A. The Formulations of Examples 24-27.

| Ingredients and Conditions | Example 24 | Example 25 | Example 26 | Example 27 |
|---|---|---|---|---|
| Base Oil* | 589.1 | 589.1 | 589.1 | 589.1 |
| ethylene/a-olefin interpolymer# | 5.95 | 5.96 | 5.95 | 5.95 |
| Solubilization Time (Hours) | 4 | 4 | 4 | 4 |
| Solubilization Temperature (°C) | 120 | 120 | 120 | 120 |
| Note: * The base oil was Exxon FN1365 100LP. # The ethylene/α-olefin interpolymers were Examples 20-23 respectively for Examples 24-27. | | | | |

Table 11B. The Formulations of Comparative Examples L-Q.

| Ingredients and Conditions | Comparative Example L | Comparative Example M | Comparative Example N | Comparative Example O | Comparative Example P | Comparative Example Q |
|---|---|---|---|---|---|---|
| Base Oil* | 757.4 | 757.4 | 757.4 | 757.4 | 757.4 | 757.4 |
| Polymer# | 7.65 | 7.65 | 7.65 | 7.67 | 7.65 | 7.65 |
| Solubilization Time (Hours) | 5 | 5 | 5 | 5 | 5 | 5 |
| Solubilization Temperature (°C) | 120 | 120 | 120 | 120 | 120 | 120 |
| Note: * The base oil was Exxon FN1365 100LP Base Oil. # The polymer were ENGAGE® 7270, ENGAGE® 7467, ENGAGE® 7447, ENGAGE® 7256, NORDEL™ IP NDR 225, and Lubrizol 2016 respectively for Comparative Examples L-Q. ENGAGE® 7270, 7467, 7447, and 7256 are polyolefin elastomers obtained from DOW, Midland, MI. NORDEL® IP NDR 225 is a ethylene-propylene-diene terpolymer from DOW. Lubrizol 2016 is an oil additive from Lubrizol Corporation, Wickliffe, Ohio. | | | | | | |

Table 11C. The Formulations of Comparative Examples R-W.

| Ingredients and Conditions | Comparative Example R | Comparative Example S | Comparative Example T | Comparative Example U | Comparative Example V | Comparative Example W |
|---|---|---|---|---|---|---|
| Base Oil* | 757.5 | 757.5 | 757.4 | 757.4 | 757.4 | 757.4 |
| Polymer# | 7.65 | 7.64 | 7.65 | 7.65 | 7.64 | 7.65 |
| Solubilization Time (Hours) | 4.75 | 3.5 | 4.0 | 4.0 | 4.75 | 4.75 |
| Solubilization Temperature (°C) | 120 | 120 | 120 | 120 | 120 | 120 |
| Note: * The base oil was Exxon FN1365 100LP Base Oil. # The polymer were ENGAGE® 8100, 8130, 8150, 8180, 8200, and 8400 respectively for Comparative Examples R-W. ENGAGE® 8100, 8130, 8150, 8180, 8200, and 8400 are polyolefin elastomers obtained from DOW. | | | | | | |

Testing of Lubricant Compositions

The lubricant compositions, *i.e.,* Examples 24-27, prepared above were tested for their kinematic viscosities, shear stabilities, shear stability indexes and viscosity losses. The results are listed in Tables 12A, 12B and 12C below. The kinematic viscosities and shear stabilities at 40°C and 100°C were measured according to ASTM D445, which is incorporated herein by reference. The shear stability indexes were measured according to ASTM D6022, which is incorporated herein by reference. The viscosity losses were measured according to ASTM D6278, which is incorporated herein by reference.

Table 12A. Test Results of Examples 24-27.

| Tests | Example 24 | Example 25 | Example 26 | Example 27 |
|---|---|---|---|---|
| Kinematic Viscosity at 40°C (cSt) | / | / | 54.78 | 63.04 |
| Kinematic Viscosity at 100°C (cSt) | 9.34 | 9.67 | 9.83 | 10.18 |
| Kinematic Viscosity at 40°C after shear (cSt) | 41.33 | 40.62 | 41.64 | 41.54 |
| Kinematic Viscosity at 100°C after shear (cSt) | 8.39 | 7.64 | 8.01 | 7.24 |
| Viscosity Loss (%) | 10.14 | 20.96 | 18.57 | 28.84 |
| Shear Stability Index (%) | 18.01 | 36.25 | 31.72 | 48.11 |

Table 12B. Test Results of Comparative Examples L-Q.

| Tests | Comparative Example L | Comparative Example M | Comparative Example N | Comparative Example O | Comparative Example P | Comparative Example Q |
|---|---|---|---|---|---|---|
| Kinematic Viscosity at 40°C (cSt) | 63.30 | 56.92 | 44.31 | 38.39 | 48.99 | 52.57 |
| Kinematic Viscosity at 100°C (cSt) | 11.80 | 10.11 | 8.09 | 8.56 | 8.78 | 9.32 |
| Kinematic Viscosity at 40°C after shear (cSt) | 46.38 | 40.94 | 38.51 | 34.45 | 41.77 | 44.78 |
| Kinematic Viscosity at 100°C after shear (cSt) | 8.24 | 7.56 | 7.15 | 7.61 | 7.66 | 8.11 |
| Viscosity Loss (%) | 30.19 | 25.21 | 11.65 | 11.07 | 12.74 | 12.99 |
| Shear Stability Index (%) | 46.13 | 42.25 | 23.49 | 21.13 | 23.79 | 23.08 |

Table 12C. Test Results of Comparative Examples R-W.

| Tests | Comparative Example R | Comparative Example S | Comparative Example T | Comparative Example U | Comparative Example V | Comparative Example W |
|---|---|---|---|---|---|---|
| Kinematic Viscosity at 40°C (cSt) | 56.99 | 38.46 | 62.87 | 59.76 | 42.79 | 33.98 |

(continued)

| Tests | Comparative Example R | Comparative Example S | Comparative Example T | Comparative Example U | Comparative Example V | Comparative Example W |
|---|---|---|---|---|---|---|
| Kinematic Viscosity at 100°C (cSt) | 10.14 | 7.16 | 10.88 | 10.61 | 7.89 | 6.61 |
| Kinematic Viscosity at 40°C after shear (cSt) | 42.65 | 35.48 | 42.88 | 40.35 | 37.83 | 32.45 |
| Kinematic Viscosity at 100°C after shear (cSt) | 7.66 | 6.67 | 7.69 | 7.49 | 7.03 | 6.35 |
| Viscosity Loss (%) | 24.48 | 6.87 | 29.34 | 29.37 | 10.97 | 3.86 |
| Shear Stability Index (%) | 40.96 | 15.95 | 46.94 | 47.72 | 22.71 | 10.08 |

As described above, embodiments of the invention provide various lubricant compositions based on the disclosed ethylene/a-olefin interpolymers as viscosity modifiers for all type of oils and lubricants. These include motor oil, transmission fluids, gear oil, etc. These novels polymers could also be used in other hydrocarbons such as diesel fuel, both natural and synthetic, hydraulic fluids and other oils including petroleum derived products, synthetic oil and natural oils. The ethylene/a-olefin interpolymers can provide a similar benefit in properties as the styrenic block copolymers, such as KRATON®. These ethylene/a-olefin interpolymers can be used to thicken motor oil. They offer the possibility of improved low temperature performance and good flexibility in formulating motor oil, gear lubricates and greases. By controlling the block distribution of these polymers, low temperature performance can be optimized and the undesirable oil and wax interactions can be avoided. By controlling the level of cystallinity, the polymer product form can be varied from pellets to bales. Additional advantages and characteristics are apparent to those skilled in the art.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

**1.** A lubricant composition comprising:

(i) a base oil; and

(ii) an ethylene/a-olefin block interpolymer, wherein the ethylene/a-olefin block interpolymer comprises at least 80 mole.%, of the whole polymer, of ethylene; and has an Mw/Mn from 2.0 to 3.5, and

(a) has at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(b) is **characterized by** a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

wherein the CRYSTAF peak is determined using at least 5 percent of the cumulative polymer, and if less than 5 percent of the polymer has an identifiable CRYSTAF peak, then the CRYSTAF temperature is 30°C; or
(c) is **characterized by** an elastic recovery, Re, in percent at 300 percent strain and 1 cycle measured with a compression-molded film of the ethylene/a-olefin block interpolymer, and has a density, d, in grams/cubic centimeter, wherein the numerical values of Re and d satisfy the following relationship when ethylene/a-olefin block interpolymer is substantially free of a cross-linked phase:

$$Re > 1481\text{-}1629(d);$$

or
(d) has a comonomer content of the TREF fraction which elutes between 40°C and 130°C greater than or equal to the quantity (-0.2013)T + 21.07, where T is the numerical value of the peak elution temperature of the TREF fraction, measured in °C; or
(e) has a storage modulus at 25°C, G'(25°C), and a storage modulus at 100°C, G'(100°C), wherein the ratio of G'(25°C) to G'(100°C) is in the range of 1:1 to 9:1.

**2.** The lubricant composition of claim 1, wherein the ethylene/a-olefin block interpolymer has at least one melting point, Tm, in degrees Celsius, and a density, d, in grams/cubic centimeter, wherein the numerical values of Tm and d correspond to the relationship:

$$Tm \geq 858.91 - 1825.3(d) + 1112.8(d)^2.$$

**3.** The lubricant composition of claim 1, wherein the ethylene/a-olefin block interpolymer is **characterized by** a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g,}$$

wherein the CRYSTAF peak is determined using at least 5 percent of the cumulative polymer, and if less than 5 percent of the polymer has an identifiable CRYSTAF peak, then the CRYSTAF temperature is 30°C.

**4.** The lubricant composition of claim 1, wherein the ethylene/a-olefin block interpolymer is **characterized by** an elastic recovery, Re, in percent at 300 percent strain and 1 cycle measured with a compression-molded film of the ethylene/a-olefin block interpolymer, and has a density, d, in grams/cubic centimeter, wherein the numerical values of Re and d satisfy the following relationship when ethylene/a-olefin block interpolymer is substantially free of a cross-linked phase:

$$Re > 1481\text{-}1629(d).$$

**5.** The lubricant composition of claim 1, wherein the numerical values of Re and d satisfy the following relationship:

$$Re>1491-1629(d).$$

**6.** The lubricant composition of claim 1, wherein the numerical values of Re and d satisfy the following relationship:

$$Re>1501-1629(d).$$

**7.** The lubricant composition of claim 1, wherein the numerical values of Re and d satisfy the following relationship:

$$Re>1511-1629(d).$$

**8.** A lubricant composition comprising:

(i) a base oil; and
(ii) an ethylene/a-olefin block interpolymer, wherein the ethylene/a-olefin block interpolymer comprises at least 80 mole.%, of the whole polymer, of ethylene; and has an Mw/Mn from 2.0 to 3.5, and has

(a) at least one molecular fraction which elutes between 40°C and 130°C when fractionated using TREF, **characterized in that** the fraction has a block index of at least 0.5 and up to 1 or
(b) an average block index greater than 0.1 and up to about 1.0.

**9.** The lubricant composition of claims 1 or 8, wherein the ethylene/a-olefin block interpolymer has a comonomer content of the TREF fraction which elutes between 40°C and 130°C greater than or equal to the quantity (-0.2013)T + 21.07 wherein T is the numerical value of the peak elution temperature of the TREF fraction, measured in °C.

**10.** The lubricant composition of claims 1 or 8, wherein the ethylene/a-olefin block interpolymer has a storage modulus at 25°C, G'(25°C), and a storage modulus at 100°C, G'(100°C), wherein the ratio of G'(25°C) to G'(100°C) is in the range of 1:1 to 9:1.

**11.** The lubricant composition of claims 1 or 8, wherein the $\alpha$-olefin is styrene, propylene, 1-butene, 1-hexene, 1-octene, 4-methyl-1-pentene, norbornene, 1-decene, 1,5-hexadiene, or a combination thereof.

**12.** The lubricant composition of claims 1 or 8, wherein the base oil is selected from the group consisting of the base stocks of API Groups I, II, III, IV and V and combinations thereof.

**13.** The lubricant composition of claims 1 or 8, wherein the base oil is a natural oil, a synthetic oil or a combination thereof.

**14.** The lubricant composition of claims 1 or 8, wherein the lubricant composition further comprises at least an additive.

**15.** The lubricant composition of claim 14, wherein the additive is a detergent, a dispersant, a friction modifier, a pour point depressant, a demulsifier, an anti-foam, a corrosion inhibitor, an anti-wear agent, an antioxidant, a rust inhibitor, a thickener, or a combination thereof.

**16.** The lubricant composition of claims 1 or 8, wherein the lubricant composition is a motor oil, a transmission fluid, a gear oil, a power steering fluid, a shock absorber fluid, a brake fluid, a hydraulic fluid or a grease.

**17.** The lubricant composition of claims 16, wherein the lubricant composition is a motor oil.

**18.** The lubricant composition of claim 17, wherein the motor oil further comprises a pour point depressant, a detergent, a dispersant, an anti-wear, an antioxidant, a friction modifier, a rust inhibitor or a combination thereof.

**19.** The lubricant composition of claim 16, wherein the lubricant composition is a transmission fluid.

**20.** The lubricant composition of claim 19, wherein the transmission fluid further comprises a friction modifier, a detergent, a dispersant, an antioxidant, an anti-wear agent, an extreme pressure agent, a pour point depressant, an anti-foam, a corrosion inhibitor or a combination thereof.

**21.** The lubricant composition of claim 16, wherein the lubricant composition is a gear oil.

**22.** The lubricant composition of claim 21, wherein the gear oil further comprises an anti-wear, an extreme pressure agent, a rust inhibitor or a combination thereof.

**23.** The lubricant composition of claim 16, wherein the lubricant composition is a grease.

**24.** The lubricant composition of claim 23, wherein the grease further comprises a thickener, a complexing agent, an antioxidant, an anti-wear agent, an extreme pressure agent, an anti-foam, a corrosion inhibitor or a mixture thereof.

**Patentansprüche**

**1.** Schmiermittelzusammensetzung umfassend:

(i) ein Basisöl; und
(ii) ein Ethylen/α-Olefin-Blockinterpolymer, wobei das Ethylen/α-Olefin-Blockinterpolymer mindestens 80 mol%, auf das gesamte Polymer bezogen, an Ethylen umfasst; und eine Mw/Mn von 2,0 bis 3,5 hat, und

(a) mindestens einen Schmelzpunkt, Tm, in Grad Celsius, und eine Dichte, d, in Gramm/Kubikzentimeter hat, wobei die numerischen Werte von Tm und d dem Verhältnis entsprechen:

$$Tm > -2002{,}9 + 4538{,}5(d) - 2422{,}2(d)^2;$$

oder
(b) durch eine Fusionswärme, ΔH in J/g, und eine Deltamenge, ΔT, in Grad Celsius definiert als die Temperaturdifferenz zwischen dem höchsten DSC-Peak und dem höchsten CRYSTAF-Peak, gekennzeichnet ist, wobei die numerischen Werte von ΔT und ΔH die folgenden Verhältnisse haben:

$$\Delta T > -0{,}1299(\Delta H) + 62{,}81 \text{ für } \Delta H \text{ größer als null und bis zu } 130 \text{ J/g}$$

$$\Delta T \geq 48°C \text{ für } \Delta H \text{ größer als } 130 \text{ J/g,}$$

wobei der CRYSTAF-Peak unter Verwendung von mindestens 5 % des kumulativen Polymers bestimmt wird, und falls weniger als 5 % des Polymers einen identifizierbaren CRYSTAF-Peak aufweist, dann ist die CRYSTAF-Temperatur 30 °C; oder
(c) durch eine elastische Erholung, Re, in Prozent bei 300 % Belastung und 1 Durchlauf, gemessen mit einer formgepressten Folie des Ethylen/α-Olefin-Blockinterpolymers, gekennzeichnet ist, und eine Dichte, d, in Gramm/Kubikzentimeter hat, wobei die numerischen Werte von Re und d dem folgenden Verhältnis genügen, wenn das Ethylen/α-Olefin-Blockinterpolymer im Wesentlichen frei von einer vernetzten Phase ist:

$$Re > 1481 - 1629(d);$$

oder
(d) einen Comonomergehalt der TREF Fraktion hat, die zwischen 40°C und 130°C größer als oder gleich der Menge (-0,2013)T + 21,07 eluiert, wobei T der numerische Wert der Peakelutionstemperatur der TREF Fraktion, gemessen in °C, ist; oder
(e) ein Speichermodul bei 25°C, G'(25°C) hat und ein Speichermodul bei 100 °C, G'(100°C), wobei das Verhältnis von G'(25°C) zu G'(100°C) im Bereich von 1:1 bis 9:1 ist.

**2.** Schmiermittelzusammensetzung nach Anspruch 1, wobei das Ethylen/α-Olefin-Blockinterpolymer mindestens einen Schmelzpunkt, Tm, in Grad Celsius, und eine Dichte, d, in Gramm/Kubikzentimeter hat, wobei die numerischen Werte von Tm und d dem Verhältnis entsprechen:

$$Tm \geq 858{,}91 - 1825{,}3(d) + 1112{,}8(d)^2.$$

3. Schmiermittelzusammensetzung nach Anspruch 1, wobei das Ethylen/α-Olefin-Blockinterpolymer durch eine Fusionswärme, ΔH in J/g, und eine Deltamenge, ΔT, in Grad Celsius definiert als die Temperaturdifferenz zwischen dem höchsten DSC-Peak und dem höchsten CRYSTAF-Peak, gekennzeichnet ist, wobei die numerischen Werte von ΔT und ΔH die folgenden Verhältnisse haben:

$$\Delta T > -0{,}1299(\Delta H) + 62{,}81 \text{ für } \Delta H \text{ größer als null und bis zu 130 J/g}$$

$$\Delta T \geq 48°C \text{ für } \Delta H \text{ größer als 130 J/g,}$$

wobei der CRYSTAF-Peak unter Verwendung von mindestens 5 % des kumulativen Polymers bestimmt wird, und falls weniger als 5 % des Polymers einen identifizierbaren CRYSTAF-Peak aufweist, dann ist die CRYSTAF-Temperatur 30 °C.

4. Schmiermittelzusammensetzung nach Anspruch 1, wobei das Ethylen/α-Olefin-Blockinterpolymer durch eine elastische Erholung, Re, in Prozent bei 300 % Belastung und 1 Durchlauf, gemessen mit einer formgepressten Folie des Ethylen/α-Olefin-Blockinterpolymers, gekennzeichnet ist, und eine Dichte, d, in Gramm/Kubikzentimeter hat, wobei die numerischen Werte von Re und d dem folgenden Verhältnis genügen, wenn das Ethylen/α-Olefin-Blockinterpolymer im Wesentlichen frei von einer vernetzten Phase ist:

$$Re > 1481 - 1629(d).$$

5. Schmiermittelzusammensetzung nach Anspruch 1, wobei die numerischen Werte von Re und d dem folgenden Verhältnis genügen:

$$Re > 1491 - 1629(d).$$

6. Schmiermittelzusammensetzung nach Anspruch 1, wobei die numerischen Werte von Re und d dem folgenden Verhältnis genügen:

$$Re > 1501 - 1629(d).$$

7. Schmiermittelzusammensetzung nach Anspruch 1, wobei die numerischen Werte von Re und d dem folgenden Verhältnis genügen:

$$Re > 1511 - 1629(d).$$

8. Schmiermittelzusammensetzung umfassend:

(i) ein Basisöl; und
(ii) ein Ethylen/α-Olefin-Blockinterpolymer, wobei das Ethylen/α-Olefin-Blockinterpolymer mindestens 80 mol%, auf das gesamte Polymer bezogen, an Ethylen umfasst; und eine Mw/Mn von 2,0 bis 3,5 hat, und

(a) mindestens eine molekulare Fraktion hat, die zwischen 40°C und 130°C eluiert, wenn unter Verwendung von TREF fraktioniert, **dadurch gekennzeichnet, dass** die Fraktion einen Blockindex von mindestens 0,5 und bis zu 1 hat oder
(b) einen durchschnittlichen Blockindex größer als 0,1 und bis zu ca. 1,0 hat.

9. Schmiermittelzusammensetzung nach Ansprüchen 1 oder 8, wobei das Ethylen/a-Olefin-Blockinterpolymer einen Comonomergehalt der TREF Fraktion hat, die zwischen 40°C und 130°C größer als oder gleich der Menge (-0,2013)T

+ 21,07 eluiert, wobei T der numerische Wert der Peakelutionstemperatur der TREF Fraktion, gemessen in °C, ist.

**10.** Schmiermittelzusammensetzung nach Ansprüchen 1 oder 8, wobei das Ethylen/a-Olefin-Blockinterpolymer ein Speichermodul bei 25°C, G'(25°C) hat und ein Speichermodul bei 100 °C, G'(100°C), wobei das Verhältnis von G'(25°C) zu G'(100°C) im Bereich von 1:1 bis 9:1 ist.

**11.** Schmiermittelzusammensetzung nach Ansprüchen 1 oder 8, wobei das α-Olefin Styren, Propylen, 1-Buten, 1-Hexen, 1-Octen, 4-Methyl-1-penten, Norbornen, 1-Decen, 1,5-Hexadien, oder eine Kombination davon ist.

**12.** Schmiermittelzusammensetzung nach Ansprüchen 1 oder 8, wobei das Basisöl ausgewählt ist aus der Gruppe bestehend aus dem Grundbestand der API Gruppen I, II, III, IV und V und Kombinationen davon.

**13.** Schmiermittelzusammensetzung nach Ansprüchen 1 oder 8, wobei das Basisöl ein natürliches Öl, ein synthetisches Öl oder eine Kombination davon ist.

**14.** Schmiermittelzusammensetzung nach Ansprüchen 1 oder 8, wobei die Schmiermittelzusammensetzung ferner mindestens ein Additiv umfasst.

**15.** Schmiermittelzusammensetzung nach Anspruch 14, wobei das Additiv ein Detergens, ein Dispergens, ein Reibungsmodifizierungsmittel, ein Stockpunktsenkungsmittel, ein Demulgator, ein Entschäumer, ein Korrosionsschutzmittel, ein Verschleißminderer, ein Antioxidans, ein Rostschutzmittel, ein Verdickungsmittel oder eine Kombination davon ist.

**16.** Schmiermittelzusammensetzung nach Ansprüchen 1 oder 8, wobei die Schmiermittelzusammensetzung ein Motoröl, eine Übertragungsflüssigkeit, ein Getriebeöl, ein Öl für hilfskraftverstärkte Lenkung, eine Stoßdämpferflüssigkeit, eine Bremsflüssigkeit, eine Hydraulikflüssigkeit oder ein Fett ist.

**17.** Schmiermittelzusammensetzung nach Anspruch 16, wobei die Schmiermittelzusammensetzung ein Motoröl ist.

**18.** Schmiermittelzusammensetzung nach Anspruch 17, wobei das Motoröl ferner ein Stockpunktsenkungsmittel, ein Detergens, ein Dispergens, einen Verschleißminderer, ein Antioxidans, ein Reibungsmodifizierungsmittel, ein Rostschutzmittel oder eine Kombination davon umfasst.

**19.** Schmiermittelzusammensetzung nach Anspruch 16, wobei die Schmiermittelzusammensetzung eine Übertragungsflüssigkeit ist.

**20.** Schmiermittelzusammensetzung nach Anspruch 19, wobei die Übertragungsflüssigkeit ferner ein Reibungsmodifizierungsmittel, ein Detergens, ein Dispergens, ein Antioxidans, einen Verschleißminderer, ein Hochdruckmittel, ein Stockpunktsenkungsmittel, einen Entschäumer, ein Korrosionsschutzmittel oder eine Kombination davon umfasst.

**21.** Schmiermittelzusammensetzung nach Anspruch 16, wobei die Schmiermittelzusammensetzung ein Getriebeöl ist.

**22.** Schmiermittelzusammensetzung nach Anspruch 21, wobei das Getriebeöl ferner einen Verschleißminderer, ein Hochdruckmittel, ein Rostschutzmittel oder eine Kombination davon umfasst.

**23.** Schmiermittelzusammensetzung nach Anspruch 16, wobei die Schmiermittelzusammensetzung ein Fett ist.

**24.** Schmiermittelzusammensetzung nach Anspruch 23, wobei das Fett ferner ein Verdickungsmittel, einen Komplexbildner, ein Antioxidans, einen Verschleißminderer, ein Hochdruckmittel, einen Entschäumer, ein Korrosionsschutzmittel oder eine Mischung davon umfasst.

## Revendications

**1.** Une composition de lubrifiant comprenant :

(i) une huile de base ; et
(ii) un interpolymère séquencé d'éthylène/α-oléfine, dans laquelle l'interpolymère séquencé d'éthylène/α-oléfine

comprend au moins 80 % en moles, du polymère dans son ensemble, d'éthylène ; et présente un Mw/Mn allant de 2,0 à 3,5, et

(a) présente au moins un point de fusion, Tm, en degrés Celsius, et une masse volumique, d, en grammes/centimètre cube, dans laquelle les valeurs numériques de Tm et d correspondent à la relation :

$$T_m > -2\ 002{,}9 + 4\ 538{,}5(d) - 2\ 422{,}2(d)^2\ ;$$

ou
(b) est **caractérisé par** une chaleur de fusion, ΔH en J/g, et une quantité delta, ΔT, en degrés Celsius définie comme la différence de température entre le pic DSC le plus haut et le pic CRYSTAF le plus haut, dans laquelle les valeurs numériques de ΔT et ΔH présentent les relations suivantes :

$$\Delta T > -0{,}1299(\Delta H) + 62{,}81 \text{ pour } \Delta H \text{ supérieure à zéro et allant jusqu'à } 130 \text{ J/g},$$

$$\Delta T \geq 48\ °C \text{ pour } \Delta H \text{ supérieure à } 130 \text{ J/g},$$

dans laquelle le pic CRYSTAF est déterminé à l'aide d'au moins 5 pour cent du polymère cumulé, et si moins de 5 pour cent du polymère présente un pic CRYSTAF identifiable, alors la température CRYSTAF est de 30 °C ; ou
(c) est **caractérisé par** une recouvrance élastique, Re, en pourcentage pour une déformation de 300 pour cent et 1 cycle, mesurée avec un film moulé par compression de l'interpolymère séquencé d'éthylène/α-oléfine, et présente une masse volumique, d, en grammes/centimètre cube, dans laquelle les valeurs numériques de Re et d satisfont à la relation suivante lorsque l'interpolymère séquencé d'éthylène/α-oléfine est substantiellement exempt de phase réticulée :

$$Re > 1\ 481 - 1\ 629(d)\ ;$$

ou
(d) présente une teneur en comonomère de la fraction TREF qui s'élue entre 40 °C et 130 °C supérieure ou égale à la quantité (-0,2013)T + 21,07, où T est la valeur numérique de la température d'élution de pic de la fraction TREF, mesurée en °C ; ou
(e) présente un module de conservation à 25 °C, G'(25 °C), et un module de conservation à 100 °C, G'(100 °C), dans laquelle le rapport de G'(25 °C) à G'(100 °C) est compris dans la gamme de 1/1 à 9/1.

**2.** La composition de lubrifiant de la revendication 1, dans laquelle l'interpolymère séquencé d'éthylène/α-oléfine présente au moins un point de fusion, Tm, en degrés Celsius, et une masse volumique, d, en grammes/centimètre cube, dans laquelle les valeurs numériques de Tm et d correspondent à la relation :

$$Tm \geq 858{,}91 - 1\ 825{,}3(d) + 1\ 112{,}8(d)^2.$$

**3.** La composition de lubrifiant de la revendication 1, dans laquelle l'interpolymère séquencé d'éthylène/α-oléfine est **caractérisé par** une chaleur de fusion, ΔH en J/g, et une quantité delta, ΔT, en degrés Celsius définie comme la différence de température entre le pic DSC le plus haut et le pic CRYSTAF le plus haut, dans laquelle les valeurs numériques de ΔT et ΔH présentent les relations suivantes :

$$\Delta T > -0{,}1299(\Delta H) + 62{,}81 \text{ pour } \Delta H \text{ supérieure à zéro et allant jusqu'à } 130 \text{ J/g},$$

$$\Delta T \geq 48\ °C \text{ pour } \Delta H \text{ supérieure à } 130 \text{ J/g},$$

dans laquelle le pic CRYSTAF est déterminé à l'aide d'au moins 5 pour cent du polymère cumulé, et si moins de 5 pour cent du polymère présente un pic CRYSTAF identifiable, alors la température CRYSTAF est de 30 °C.

**4.** La composition de lubrifiant de la revendication 1, dans laquelle l'interpolymère séquencé d'éthylène/α-oléfine est **caractérisé par** une recouvrance élastique, Re, en pourcentage pour une déformation de 300 pour cent et 1 cycle, mesurée avec un film moulé par compression de l'interpolymère séquencé d'éthylène/α-oléfine, et présente une masse volumique, d, en grammes/centimètre cube, dans laquelle les valeurs numériques de Re et d satisfont à la relation suivante lorsque l'interpolymère séquencé d'éthylène/α-oléfine est substantiellement exempt de phase réticulée :

$$Re > 1\,481 - 1\,629(d).$$

**5.** La composition de lubrifiant de la revendication 1, dans laquelle les valeurs numériques de Re et d satisfont à la relation suivante :

$$Re > 1\,491 - 1\,629(d).$$

**6.** La composition de lubrifiant de la revendication 1, dans laquelle les valeurs numériques de Re et d satisfont à la relation suivante :

$$Re > 1\,501 - 1\,629(d).$$

**7.** La composition de lubrifiant de la revendication 1, dans laquelle les valeurs numériques de Re et d satisfont à la relation suivante :

$$Re > 1\,511 - 1\,629(d).$$

**8.** Une composition de lubrifiant comprenant :

(i) une huile de base; et
(ii) un interpolymère séquencé d'éthylène/α-oléfine, dans laquelle l'interpolymère séquencé d'éthylène/α-oléfine comprend au moins 80 % en moles, du polymère dans son ensemble, d'éthylène ; et présente un Mw/Mn allant de 2,0 à 3,5, et présente

(a) au moins une fraction moléculaire qui s'élue entre 40 °C et 130 °C lorsqu'elle est fractionnée à l'aide de TREF, **caractérisée en ce que** la fraction présente un indice de séquence d'au moins 0,5 et allant jusqu'à 1 ou
(b) un indice de séquence moyen supérieur à 0,1 et allant jusqu'à environ 1,0.

**9.** La composition de lubrifiant des revendications 1 ou 8, dans laquelle l'interpolymère séquencé d'éthylène/α-oléfine présente une teneur en comonomère de la fraction TREF qui s'élue entre 40 °C et 130 °C supérieure ou égale à la quantité (-0,2013)T + 21,07 dans laquelle T est la valeur numérique de la température d'élution de pic de la fraction TREF, mesurée en °C.

**10.** La composition de lubrifiant des revendications 1 ou 8, dans laquelle l'interpolymère séquencé d'éthylène/α-oléfine présente un module de conservation à 25 °C, G'(25 °C), et un module de conservation à 100 °C, G'(100 °C), dans laquelle le rapport de G'(25 °C) à G'(100 °C) est compris dans la gamme de 1/1 à 9/1.

**11.** La composition de lubrifiant des revendications 1 ou 8, dans laquelle l'a-oléfine est le styrène, le propylène, le 1-butène, le 1-hexène, le 1-octène, le 4-méthyl-1-pentène, le norbornène, le 1-décène, le 1,5-hexadiène, ou une combinaison de ceux-ci.

**12.** La composition de lubrifiant des revendications 1 ou 8, dans laquelle l'huile de base est sélectionnée dans le groupe constitué des stocks de base des Groupes API I, II, III, IV et V et de combinaisons de ceux-ci.

**13.** La composition de lubrifiant des revendications 1 ou 8, dans laquelle l'huile de base est une huile naturelle, une huile synthétique ou une combinaison de celles-ci.

**14.** La composition de lubrifiant des revendications 1 ou 8, la composition de lubrifiant comprenant en outre au moins un additif.

**15.** La composition de lubrifiant de la revendication 14, dans laquelle l'additif est un détergent, un dispersant, un modificateur de frottement, un agent d'abaissement du point d'écoulement, un désémulsificateur, un antimousse, un inhibiteur de corrosion, un agent anti-usure, un antioxydant, un inhibiteur de rouille, un épaississant, ou une combinaison de ceux-ci.

**16.** La composition de lubrifiant des revendications 1 ou 8, la composition de lubrifiant étant une huile de moteur, un fluide de transmission, une huile pour engrenages, un fluide de servodirection, un fluide absorbant les chocs, un fluide de frein, un fluide hydraulique ou une graisse.

**17.** La composition de lubrifiant de la revendication 16, la composition de lubrifiant étant une huile de moteur.

**18.** La composition de lubrifiant de la revendication 17, dans laquelle l'huile de moteur comprend en outre un agent d'abaissement du point d'écoulement, un détergent, un dispersant, un agent anti-usure, un antioxydant, un modificateur de frottement, un inhibiteur de rouille ou une combinaison de ceux-ci.

**19.** La composition de lubrifiant de la revendication 16, la composition de lubrifiant étant un fluide de transmission.

**20.** La composition de lubrifiant de la revendication 19, dans laquelle le fluide de transmission comprend en outre un modificateur de frottement, un détergent, un dispersant, un antioxydant, un agent anti-usure, un agent extrême pression, un agent d'abaissement du point d'écoulement, un antimousse, un inhibiteur de corrosion ou une combinaison de ceux-ci.

**21.** La composition de lubrifiant de la revendication 16, la composition de lubrifiant étant une huile pour engrenages.

**22.** La composition de lubrifiant de la revendication 21, dans laquelle l'huile pour engrenages comprend en outre un agent anti-usure, un agent extrême pression, un inhibiteur de rouille ou une combinaison de ceux-ci.

**23.** La composition de lubrifiant de la revendication 16, la composition de lubrifiant étant une graisse.

**24.** La composition de lubrifiant de la revendication 23, dans laquelle la graisse comprend en outre un épaississant, un agent complexant, un antioxydant, un agent anti-usure, un agent extrême pression, un antimousse, un inhibiteur de corrosion ou un mélange de ceux-ci.

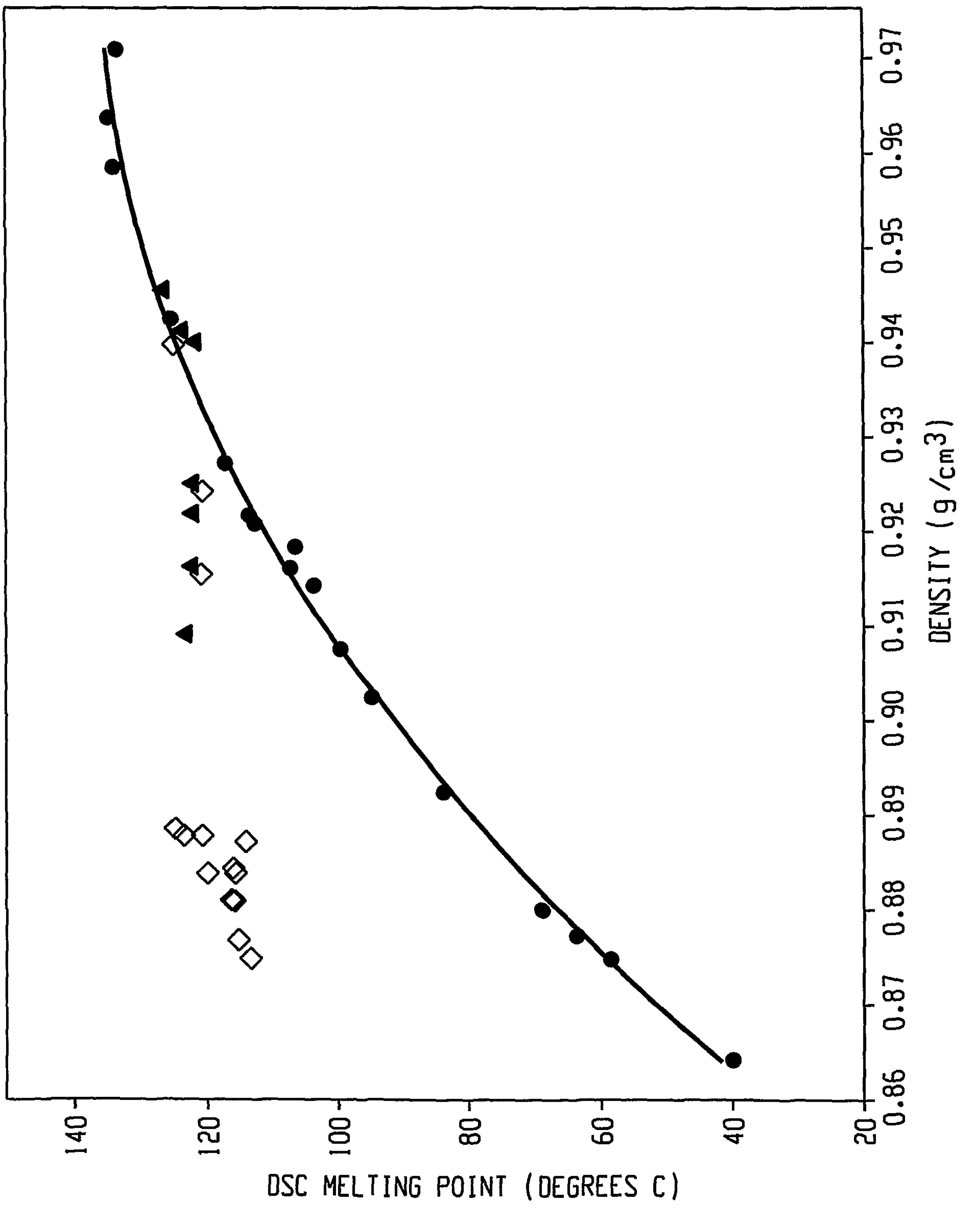
140
120
100
80
60
40
20
DSC MELTING POINT (DEGREES C)
0.86
0.87
0.88
0.89
0.90
0.91
0.92
0.93
0.94
0.95
0.96
0.97
DENSITY (g/cm3)

Fig. 1

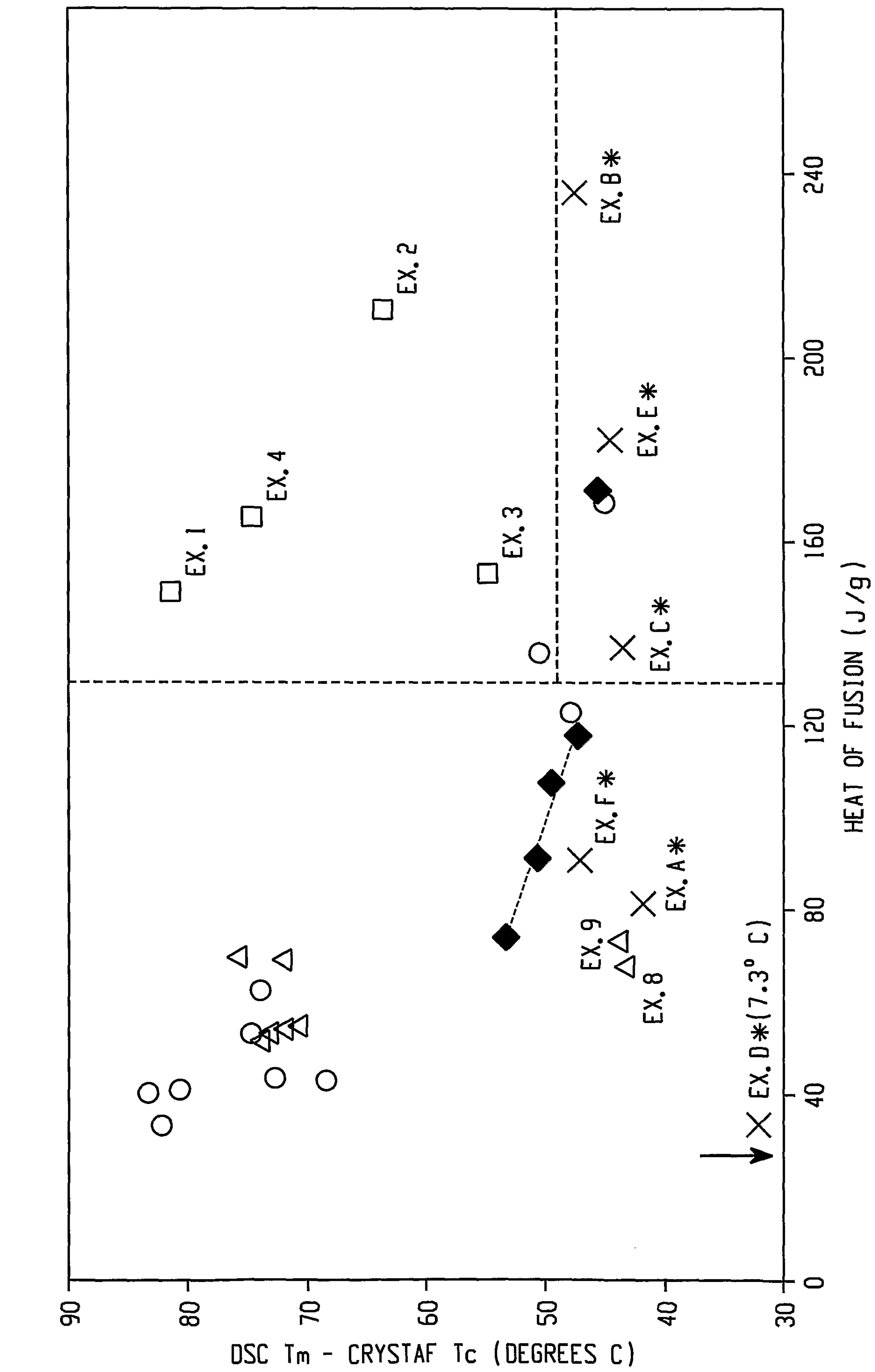
DSC Tm - CRYSTAF Tc (DEGREES C)
HEAT OF FUSION (J/g)
90
80
70
60
50
40
30
0
40
80
120
160
200
240
EX.1
EX.2
EX.3
EX.4
EX.8
EX.9
EX.A*
EX.B*
EX.C*
EX.D*(7.3° C)
EX.E*
EX.F*

Fig. 2

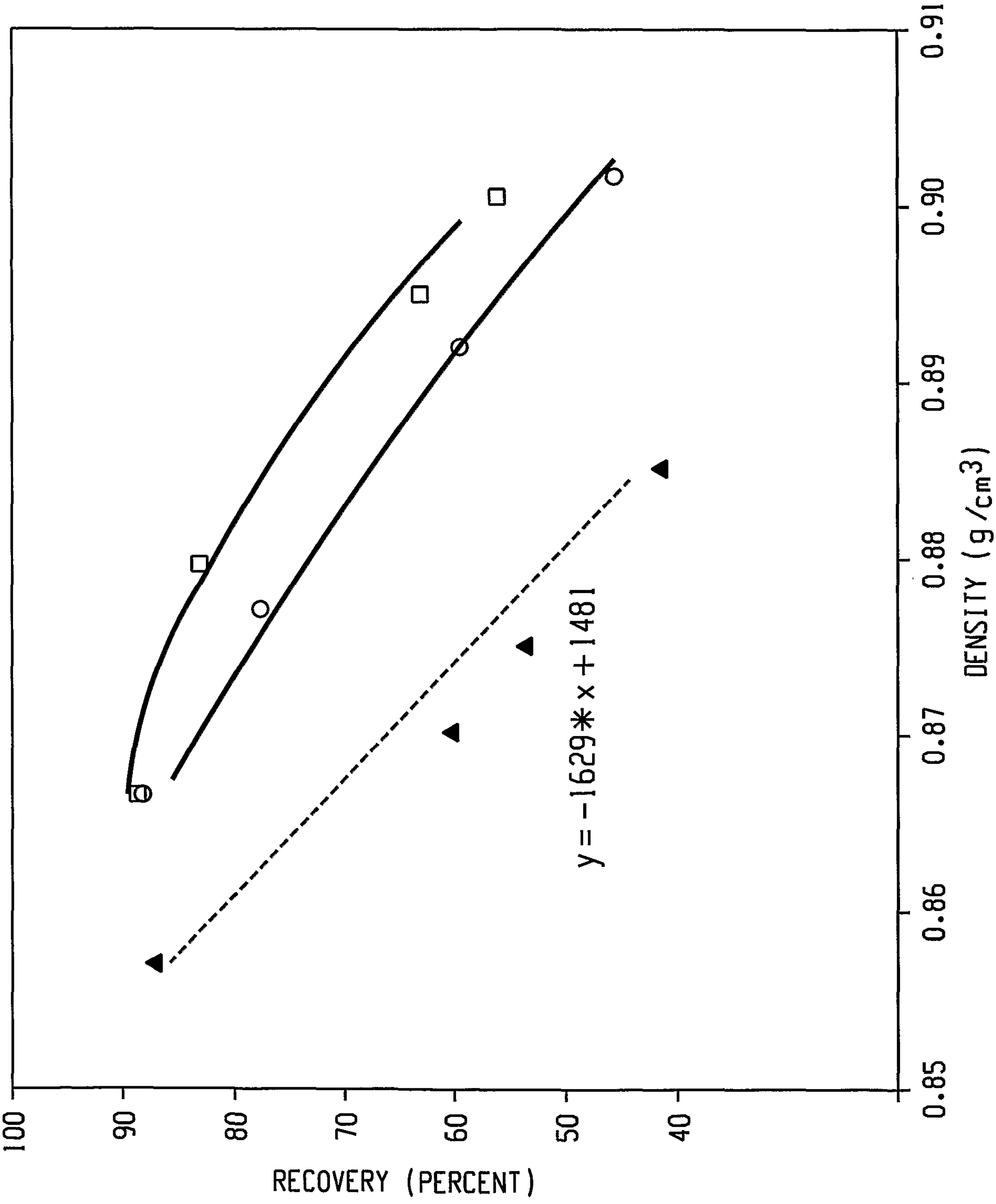
RECOVERY (PERCENT)
100
90
80
70
60
50
40
DENSITY (g/cm3)
0.85
0.86
0.87
0.88
0.89
0.90
0.91
y = -1629 * x + 1481

Fig. 3

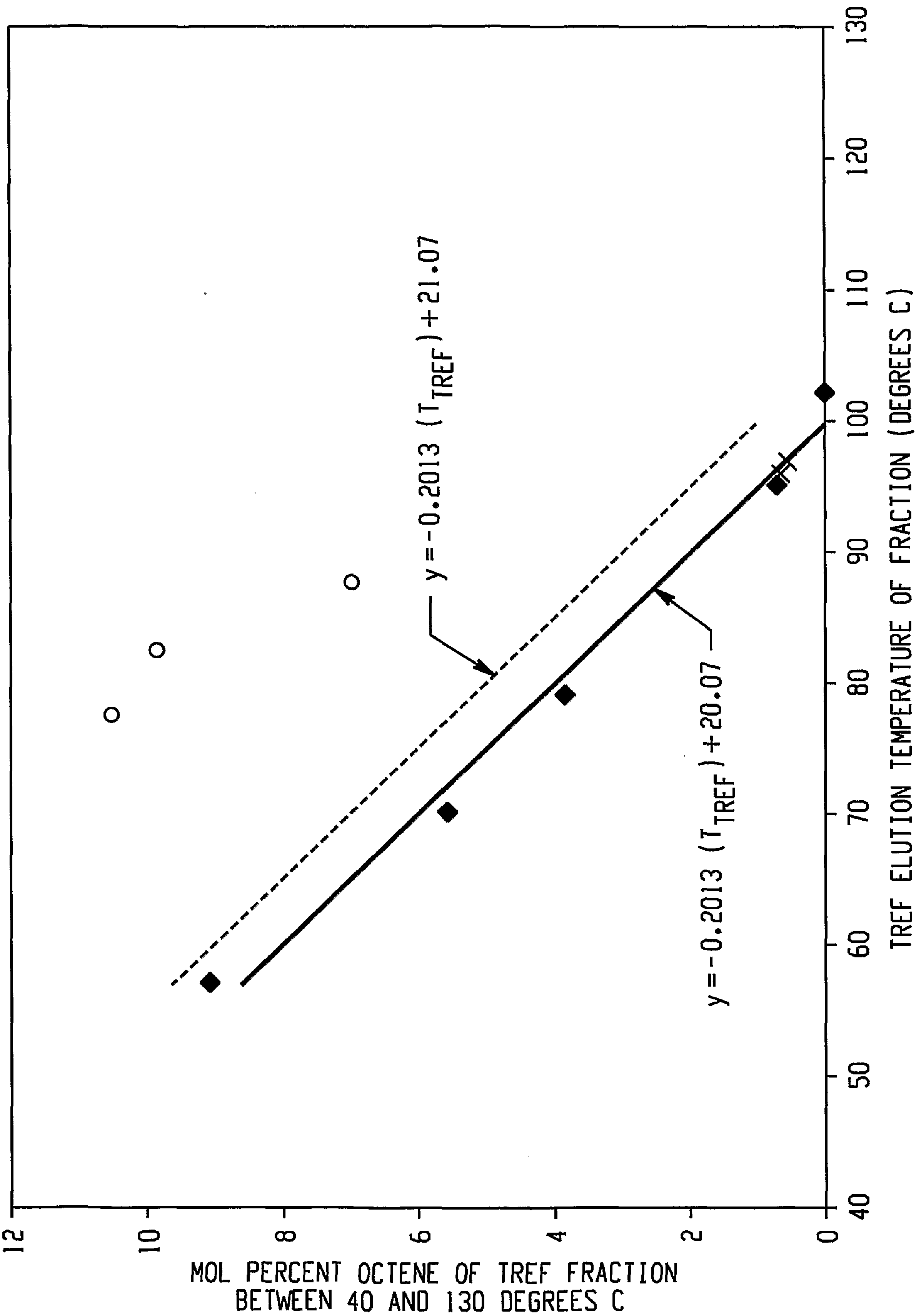
y = -0.2013 ($T_{TREF}$) + 21.07
y = -0.2013 ($T_{TREF}$) + 20.07
TREF ELUTION TEMPERATURE OF FRACTION (DEGREES C)
MOL PERCENT OCTENE OF TREF FRACTION
BETWEEN 40 AND 130 DEGREES C
40
50
60
70
80
90
100
110
120
130
0
2
4
6
8
10
12

*Fig. 4*

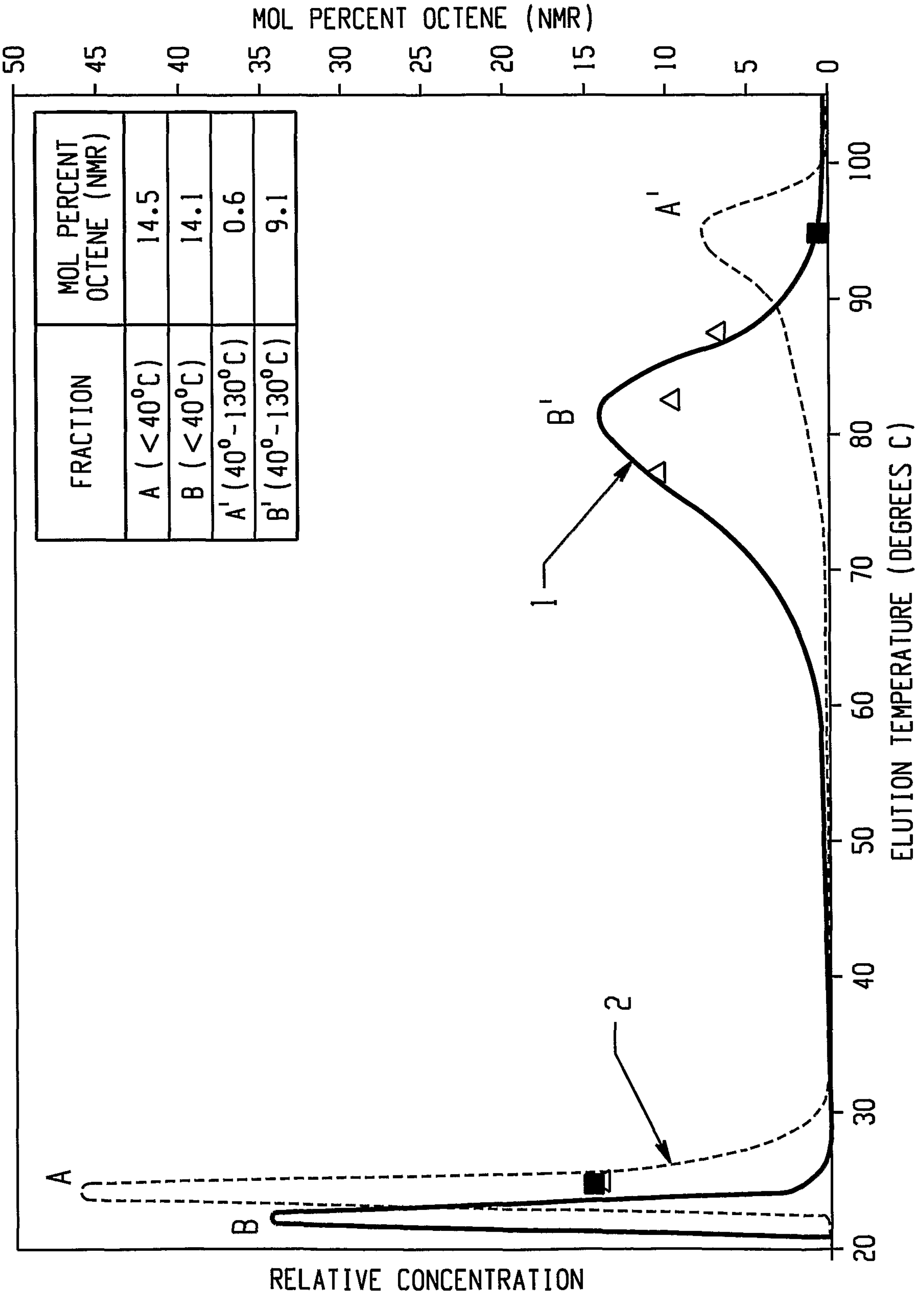

MOL PERCENT OCTENE (NMR)
50
45
40
35
30
25
20
15
10
5
0
RELATIVE CONCENTRATION
ELUTION TEMPERATURE (DEGREES C)
20
30
40
50
60
70
80
90
100
FRACTION
MOL PERCENT OCTENE (NMR)
A (<40°C)
14.5
B (<40°C)
14.1
A' (40°-130°C)
0.6
B' (40°-130°C)
9.1
A
B
A'
B'
1
2


Fig. 5

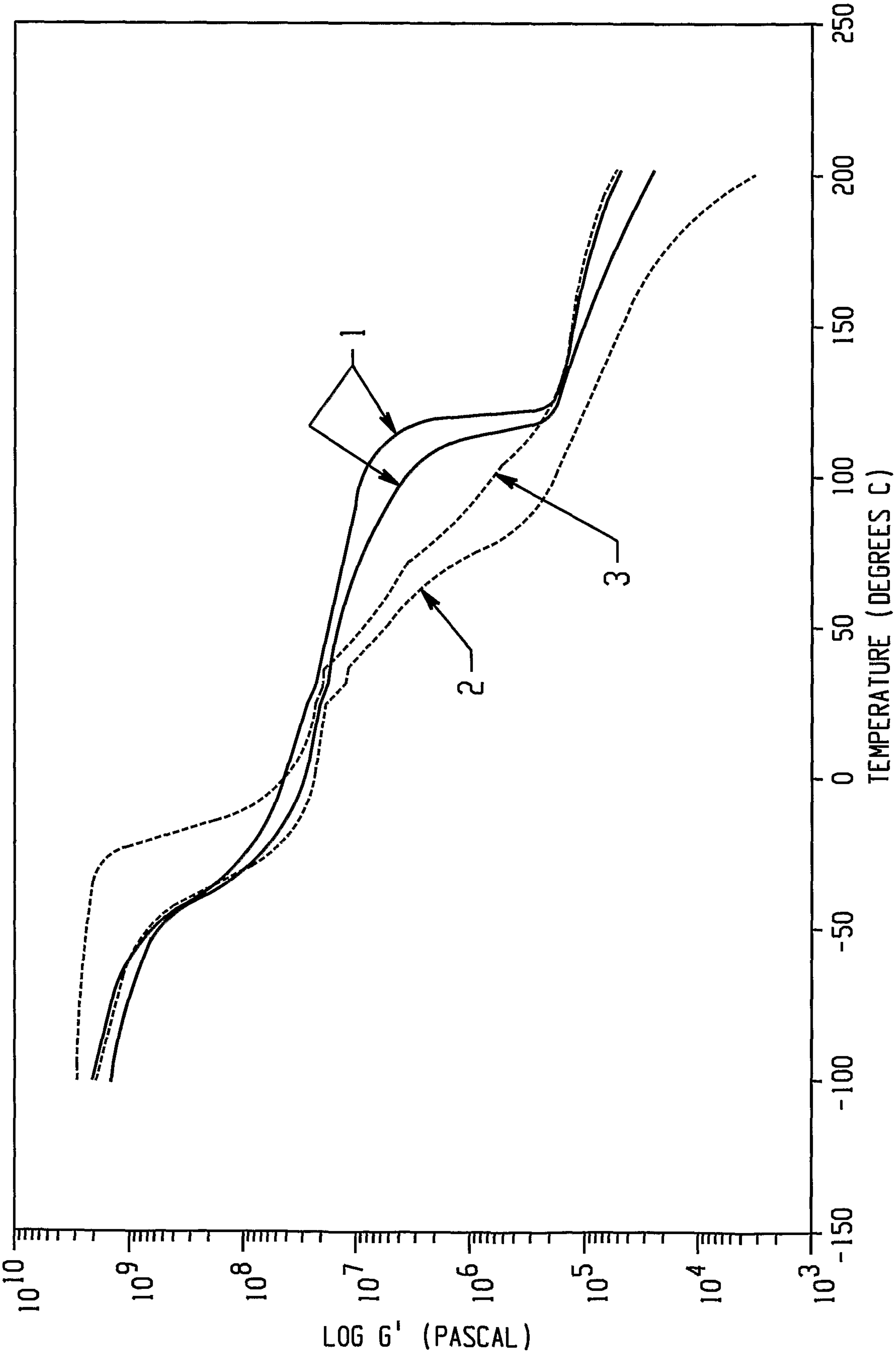

LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250
1
2
3


Fig. 6

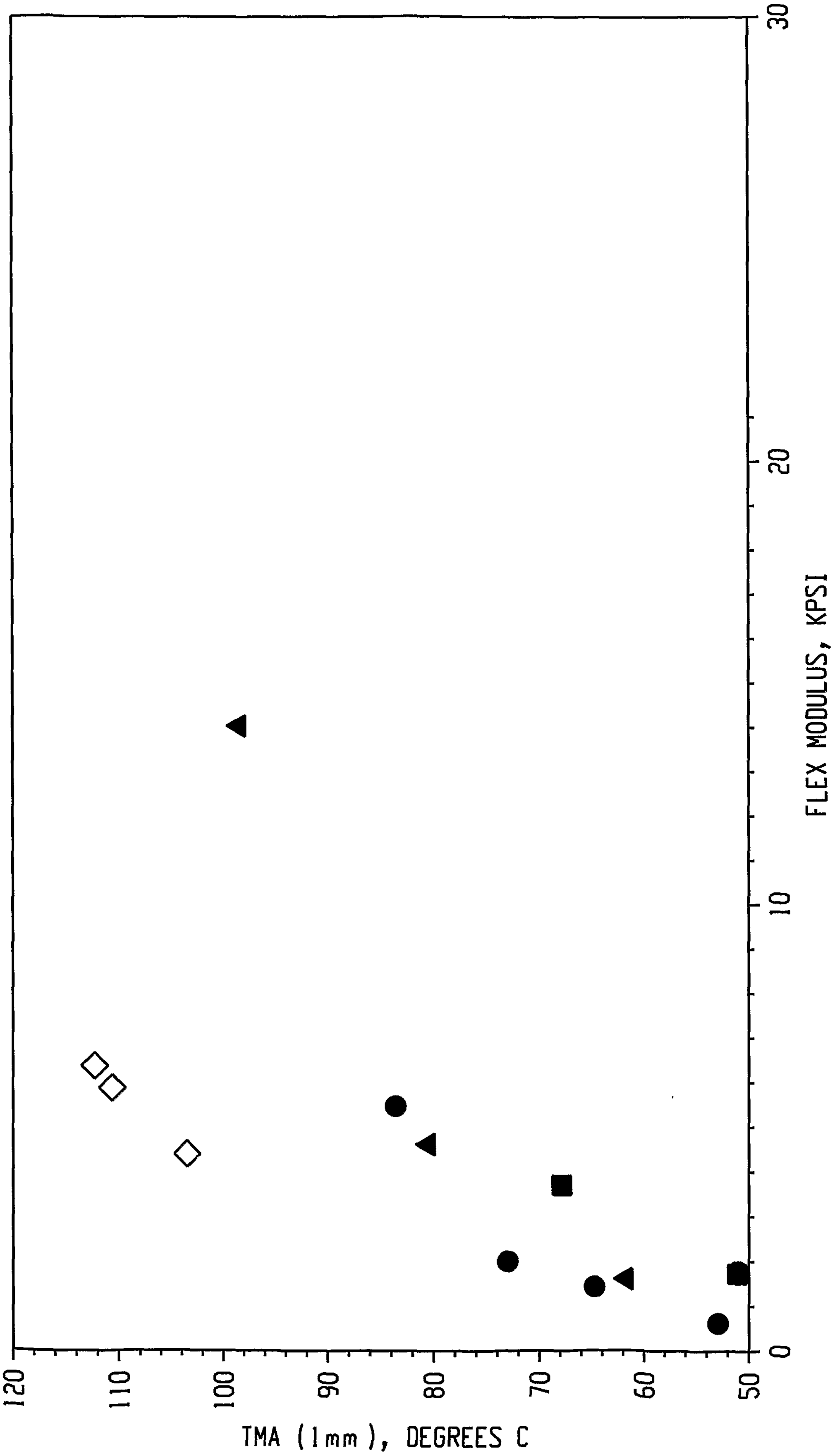

TMA (1mm), DEGREES C
120
110
100
90
80
70
60
50
FLEX MODULUS, KPSI
0
10
20
30


Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7608668 B2
- WO 2005090425 A
- WO 2005090426 A
- WO 2005090427 A
- WO 0340195 A
- WO 0424740 A
- US 20040010103 A
- US 6268444 B
- US 2003004286 A
- US 4762890 A
- US 4927888 A
- US 4950541 A
- US 4798081 A
- US 59199883 B
- US 6395671 B


### Non-patent literature cited in the description


- **MARKOVICH, RONALD P. ; HAZLITT, LONNIE G. ; SMITH, LINLEY.** Development of gel-permeation chromatography-Fourier transform infrared spectroscopy for characterization of ethylene-based polyolefin copolymers. *Polymeric Materials Science and Engineering,* 1991, vol. 65, 98-100
- **DESLAURIERS, P.J. ; ROHLFING, D.C. ; SHIEH, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **MORTIER et al.** Chemistry and Technology of Lubricants. Springer, 1996
- American Petroleum Institute (API) Publication 1509. December 1996
- **LESLIE R. RUDNICK.** Lubricant Additives: Chemistry and Applications. Marcel Dekker, 2003
- **MORTIER et al.** Chemistry and Technology of Lubricants. Springer, 1996, 75-85
- **LESLIE R. RUDNICK.** Lubricant Additives: Chemistry and Applications. Marcel Dekker, 2003, 113-136
- **MORTIER et al.** Chemistry and Technology of Lubricants. Springer, 1996, 86-90
- **LESLIE R. RUDNICK.** Lubricant Additives: Chemistry and Applications. Marcel Dekker, 2003, 137-170
- **MORTIER et al.** Chemistry and Technology of Lubricants. Springer, 1996, 183-187
- **LESLIE R. RUDNICK.** Lubricant Additives: Chemistry and Applications. Marcel Dekker, 2003, vol. 7, 171-222
- **MORTIER et al.** Chemistry and Technology of Lubricants. Springer, 1996, 187-189
- **LESLIE R. RUDNICK.** Lubricant Additives: Chemistry and Applications. Marcel Dekker, 2003, 329-354
- **MORTIER et al.** Chemistry and Technology of Lubricants. Springer, 1996, 190-193
- **MORTIER et al.** Chemistry and Technology of Lubricants. Springer, 1996, 193-196
- **LESLIE R. RUDNICK.** Lubricant Additives: Chemistry and Applications. Marcel Dekker, 2003, 223-258
- **LESLIE R. RUDNICK.** Lubricant Additives: Chemistry and Applications. Marcel Dekker, 2003, 1-28
- **WILLIAMS ; WARD.** *J. Polym. Sci., Polym. Let.,* 1968, vol. 6, 621
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455
- **RANDALL, J.C.** *JMS-Rev. Macromol. Chem. Phys.,* 1989, vol. C29, 201-317